(19) **Europäisches Patentamt / European Patent Office / Office européen des brevets**

(11) **EP 4 692 024 A1**

(12) # EUROPEAN PATENT APPLICATION
published in accordance with Art. 153(4) EPC

(43) Date of publication:
**11.02.2026 Bulletin 2026/07**

(21) Application number: **24780247.3**

(22) Date of filing: **26.03.2024**

(51) International Patent Classification (IPC):
*C04B 35/577* (2006.01)    *B28B 1/30* (2006.01)
*B33Y 10/00* (2015.01)    *B33Y 30/00* (2015.01)
*B33Y 70/00* (2020.01)    *B33Y 80/00* (2015.01)
*C04B 35/563* (2006.01)    *C04B 35/565* (2006.01)

(52) Cooperative Patent Classification (CPC):
**B28B 1/30; B33Y 10/00; B33Y 30/00; B33Y 70/00; B33Y 80/00; C04B 35/563; C04B 35/565; Y02P 10/25**

(86) International application number:
**PCT/JP2024/011833**

(87) International publication number:
**WO 2024/204134 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023056852**

(71) Applicant: **Canon Kabushiki Kaisha**
**Tokyo, 146-8501 (JP)**

(72) Inventors:
- **YOSHIOKA, Takuya**
  **Tokyo 146-8501 (JP)**
- **YASUI, Nobuhiro**
  **Tokyo 146-8501 (JP)**
- **KOKETSU, Naoyuki**
  **Tokyo 146-8501 (JP)**
- **ARII, Chiaki**
  **Tokyo 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **POWDER, METHOD FOR PRODUCING ARTICLE, MECHANICAL COMPONENT, MECHANICAL DEVICE, AND PRODUCTION DEVICE**

(57) A powder for manufacturing, wherein the powder contains boron, carbon, and silicon, wherein an organizational structure including a first solid phase composed of silicon carbide and a second solid phase composed of boron carbide is formed by melting and solidification of the powder, and wherein in a portion having the organizational structure 20, a difference between a mole fraction of the silicon carbide and a mole fraction of the boron carbide is less than or equal to 60 mol% pt.

EP 4 692 024 A1

(Cont. next page)

# FIG.1A

# FIG.1B

## Description

Technical Field

The present invention relates to a ceramic material.

Background Art

The achievement of a ceramic article excellent in mechanical properties using an additive manufacturing technique is desired. Patent literature 1 describes a technique for performing manufacturing using a powder including silicon carbide and metal boride having a melting point lower than the sublimation temperature of silicon carbide.

Citation List

Patent Literature

PTL 1: Japanese Patent Laid-Open No. 2019-064226

Summary of Invention

Technical Problem

In the powder and the manufactured product described in PTL1, there is room for improvement in the ease of manufacturing and the mechanical properties of the manufactured product. The present invention is directed to providing a technique advantageous in achieving an article excellent in mechanical properties or achieving a machine component excellent in mechanical properties.

Solution to Problem

A first aspect of means for solving the above-described issue is a powder for manufacturing, wherein the powder contains boron, carbon, and silicon, wherein an organizational structure including a first solid phase composed of silicon carbide and a second solid phase composed of boron carbide is formed by melting and solidification of the powder, and wherein in a portion having the organizational structure 20, a difference between a mole fraction of the silicon carbide and a mole fraction of the boron carbide is less than or equal to 60 mol% pt.

A second aspect of means for solving the above-described issue is a powder for manufacturing, wherein the powder contains silicon carbide and boron carbide, and wherein a difference between a mole fraction of the silicon carbide and a mole fraction of the boron carbide in the powder is less than or equal to 60 mol% pt.

A third aspect of means for solving the above-described issue is a machine component including an organizational structure including a first solid phase composed of silicon carbide and a second solid phase composed of boron carbide, wherein in a portion having the organizational structure, a difference between a mole fraction of the boron carbide and a mole fraction of the silicon carbide is less than or equal to 60 mol% pt.

Advantageous Effects of Invention

According to the present invention, it is possible to provide a technique advantageous in achieving an article excellent in mechanical properties or achieving a machine component excellent in mechanical properties.

Brief Description of Drawings

[Fig. 1A] Fig. 1A is a schematic diagram for describing a powder and an organizational structure.
[Fig. 1B] Fig. 1B is a schematic diagram for describing a powder and an organizational structure.
[Fig. 2A] Fig. 2A is a schematic diagram for describing a powder and an organizational structure.
[Fig. 2B] Fig. 2B is a schematic diagram for describing a powder and an organizational structure.
[Fig. 3] Fig. 3 is a schematic diagram for describing the powder.
[Fig. 4A] Fig. 4A is a schematic diagram for describing an infrared laser melting method.
[Fig. 4B] Fig. 4B is a schematic diagram for describing the infrared laser melting method.
[Fig. 4C] Fig. 4C is a schematic diagram for describing the infrared laser melting method.
[Fig. 4D] Fig. 4D is a schematic diagram for describing the infrared laser melting method.
[Fig. 4E] Fig. 4E is a schematic diagram for describing the infrared laser melting method.
[Fig. 4F] Fig. 4F is a schematic diagram for describing the infrared laser melting method.
[Fig. 4G] Fig. 4G is a schematic diagram for describing the infrared laser melting method.
[Fig. 4H] Fig. 4H is a schematic diagram for describing the infrared laser melting method.
[Fig. 5] Fig. 5 is a schematic diagram for describing a machine component.
[Fig. 6] Fig. 6 is a table illustrating results of examples and comparative examples.
[Fig. 7A] Fig. 7A is a scanning electron microscope (SEM) observation image and element mapping images according to example 1.
[Fig. 7B] Fig. 7A is a scanning electron microscope (SEM) observation image and element mapping images according to example 1.
[Fig. 8A] Fig. 8A is a scanning electron microscope (SEM) observation image and element mapping images according to example 6.

[Fig. 8B] Fig. 8B is a scanning electron microscope (SEM) observation image and element mapping images according to example 6.

[Fig. 9A] Fig. 9A is a scanning electron microscope (SEM) observation image and element mapping images according to example 9.

[Fig. 9B] Fig. 9B is a scanning electron microscope (SEM) observation image and element mapping images according to example 9.

[Fig. 10A] Fig. 10A is a scanning electron microscope (SEM) observation image and element mapping images according to example 11.

[Fig. 10B] Fig. 10B is a scanning electron microscope (SEM) observation image and element mapping images according to example 11.

[Fig. 11A] Fig. 11A is a scanning electron microscope (SEM) observation image and element mapping images according to example 16.

[Fig. 11B] Fig. 11B is a scanning electron microscope (SEM) observation image and element mapping images according to example 16.

[Fig. 12A] Fig. 12A is a scanning electron microscope (SEM) observation image and element mapping images according to example 17.

[Fig. 12B] Fig. 12B is a scanning electron microscope (SEM) observation image and element mapping images according to example 17.

Description of Embodiments

Hereinafter, embodiments for carrying out the present invention will be described with reference to the drawings. In the following description and drawings, components that are common across multiple figures are denoted by the same reference numerals. Accordingly, common components may be described by referring to multiple drawings, and redundant explanations of components denoted by the same reference numerals may be omitted as appropriate.

In the specification, silicon carbide is occasionally described as "SiC", boron carbide is occasionally described as "$B_4C$", and titanium diboride is occasionally described as "$TiB_2$". Each substance may have a plurality of crystal structures, or may have a non-crystalline structure. Each substance does not exclude the containing of other impurities such as hydrogen, oxygen, nitrogen, and the like. The stoichiometric ratio is not limited to a described numerical value, and for example, the portion "4" of $B_4C$ may be 3 to 5, or may be 3.5 to 4.5. Boron carbide is not limited to $B_4C$, and may be $B_{10}C$, or may be the combination of $B_{12}C_3$ and $B_{12}C_2$. In a case where the stoichiometric ratio is unspecified, boron carbide can also be described as "$B_xC_y$". In boron carbide $B_xC_y$, x/y may be 3 to 11. Silicon carbide can also be described as "$Si_xC_y$". Metal boride can also be described as "$Me_xB_y$". "x" and "y" may be replaced with other alphabetical letters.

A manufacturing powder according to the present embodiment is suitable for a technique termed a powder bed fusion method or an infrared laser melting method among direct manufacturing methods.

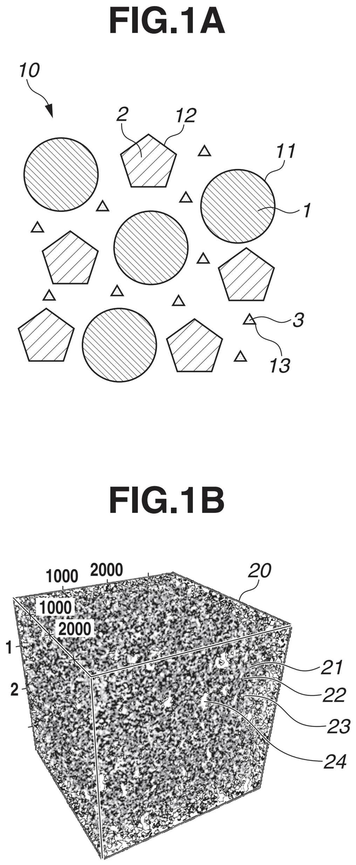

An embodiment of a powder for manufacturing an article is described. Figs. 1A and 1B schematically illustrate a powder 10. The powder 10 includes many particles. The many particles included in the powder 10 can be classified into a plurality of types depending on the shapes (including the sizes) or the materials of the particles, but can also be composed of many particles having uniformized shapes or materials. Fig. 1A illustrates an example of a configuration in which the many particles included in the powder 10 can be classified into three particle groups, namely a first particle group 11, a second particle group 12, and a third particle group 13 according to the materials of the particles. Regarding elements included in the powder 10, the powder 10 contains boron (B), carbon (C), and silicon (Si). In a more desirable form, the powder 10 further contains a metal element (the virtual element symbol is Me). Any of the particles composing the powder 10 may contain boron (B), carbon (C), silicon (Si), and further the metal element (Me). For example, the second particle group 12 and the third particle group 13 may contain boron (B). For example, the first particle group 11 and the second particle group 12 may contain carbon (C). For example, the first particle group 11 may contain silicon (Si). For example, the third particle group 13 may contain the metal element (Me). Although these elements contained in the powder 10 may be simple substances, it is desirable that these elements should be compounds. For example, a second compound 2 and a third compound 3 may contain boron (B). For example, a first compound 1 and the second compound 2 may contain carbon (C). For example, the first compound 1 may contain silicon (Si). For example, the third compound 3 may contain the metal element (Me). Typical compounds that can be contained in the powder 10 are borides, carbides, and silicides, but may also be oxides, nitrides, and the like. Typical compounds that can be contained in the powder 10 are metal compounds, silicon compounds, and carbon compounds. More typical compounds that can be contained in the powder 10 are silicon carbide (SiC), boron carbide ($B_4C$), metal carbide (MeC), metal boride ($MeB_2$), silicon boride ($SiB_6$), and metal silicide ($MeSi$ or $MeSi_2$). It is desirable that the powder 10 should contain carbon (C) and silicon (Si) as at least silicon carbide (SiC). It is desirable that the powder 10 should contain carbon (C) and boron (B) as at least boron carbide ($B_4C$). It is desirable that the powder 10 should contain boron (B) and the metal element (Me) as at least metal boride ($MeB_2$). It is desirable that the powder 10 should contain silicon carbide (SiC) and boron carbide ($B_4C$). It is also desirable that the powder 10 should further contain metal boride ($MeB_2$).

It is desirable that the metal element (Me) should be a transition element rather than a typical element. Specifically, it is desirable that the metal element (Me) should be elements of groups 4 to 6, such as titanium (Ti), zirconium (Zr), hafnium (Hf), vanadium (V), niobium (Nb), tantalum (Ta), chromium (Cr), tungsten (W), and the like. For example, metal boride ($MeB_2$) that is a boride of the metal element (Me) is titanium boride ($TiB_2$), zirconium boride ($ZrB_2$), hafnium boride ($HfB_2$), vanadium boride ($VB_2$), niobium boride ($NbB_2$), tantalum boride ($TaB_2$), chromium boride ($CrB_2$), or tungsten boride ($WB_2$).

In the unit mass (e.g., 10 g) of the powder 10 according to the present embodiment, the percentage of the amount of substance (mol) of each material relative to the amount of substance (mol) of all materials is a mole fraction (mol%). Each material may be a compound, or may be a simple substance, or may be a mixture of compounds, a mixture of simple substances, or a mixture of a compound and a simple substance. Particularly, attention is paid to a mole fraction a (mol%) of silicon carbide, a mole fraction b (mol%) of boron carbide, and a mole fraction c (mol%) of metal boride in the powder 10. a > 0, b > 0, and c ≥ 0.

It is desirable that the total of the mole fraction a (mol%) of silicon carbide, the mole fraction b (mol%) of boron carbide, and the mole fraction c (mol%) of metal boride should be 75 mol% or more. It is also desirable that the total of the mole fractions a, b, and c (mol%) should be 86 mol% or more. It is more desirable that the total of the mole fractions a, b, and c (mol%) should be 90 mol% or more. The total of the mole fractions a, b, and c (mol%) may be 100 mol%. It is desirable that a mole fraction d (mol%) of a compound that is none of silicon carbide, boron carbide, and metal boride should be smaller than both the mole fraction a (mol%) of silicon carbide and the mole fraction b (mol%) of boron carbide (a > d, b > d). It is desirable that the mole fraction d (mol%) of the compound that is none of silicon carbide, boron carbide, and metal boride should be smaller than all of the mole fraction a (mol%) of silicon carbide, the mole fraction b (mol%) of boron carbide, and the mole fraction c (mol%) of metal boride (a > d, b > d, c > d). It is desirable that the mole fraction of a compound including neither of boron (B) and carbon (C) should be 14 mol% or less. It is also desirable that the mole fraction of the compound including neither of boron (B) and carbon (C) should be less than 10 mol%.

In the present embodiment, the difference (|a - b|) between the mole fraction a of silicon carbide and the mole fraction b of boron carbide is 60 mol% pt or less. It is desirable that the difference (|a - b|) between the mole fraction a of silicon carbide and the mole fraction b of boron carbide should be 50 mol% pt or less. It is also desirable that the difference (|a - b|) between the mole fraction a of silicon carbide and the mole fraction b of boron carbide should be 40 mol% pt or less. It is more desirable that the difference (|a - b|) between the mole fraction a of silicon carbide and the mole fraction b of boron carbide should be 30 mol% pt or less. The difference (|a - b|) between the mole fraction a of silicon carbide and the mole fraction b of boron carbide may be 20 mol% pt or less, or may be 5 mol% pt or more.

As described above, the difference (|a - b|) between the mole fraction a of silicon carbide and the mole fraction b of boron carbide in the powder 10 is made small, whereby it is possible to make the melting point of the powder 10 lower than the melting point of silicon carbide and the melting point of boron carbide.

Although the mole fraction a of silicon carbide may be greater than the mole fraction b of boron carbide (a > b), it is desirable that the mole fraction a of silicon carbide should be smaller than the mole fraction b of boron carbide (a < b). This is advantageous in decreasing the melting point of the powder 10.

If the powder 10 contains metal boride (c > 0), it is desirable that the mole fraction a of silicon carbide should be greater than the mole fraction c of metal boride (a > c), and it is also desirable that the mole fraction b of boron carbide should be greater than the mole fraction c of metal boride (b > c). This is advantageous in reducing the weight of the powder 10 or a manufactured product manufactured using the powder 10.

It is desirable that the mole fraction a of silicon carbide should be 35 to 60 mol%. It is desirable that the mole fraction a of silicon carbide should be 35 to 45 mol%. It is desirable that the mole fraction b of boron carbide should be 36 to 65 mol%. It is desirable that the mole fraction b of boron carbide should be 36 to 59 mol%. It is desirable that the mole fraction c of metal boride should be 4 to 40 mol%.

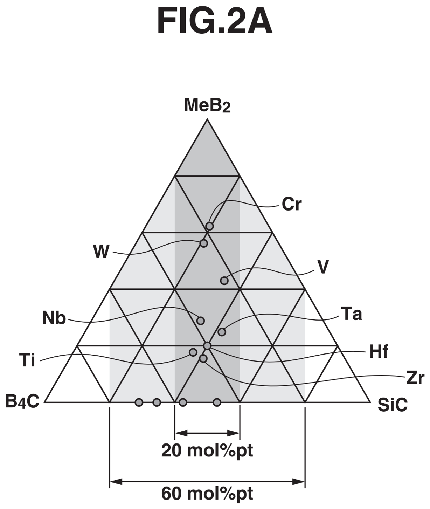

Fig. 2A illustrates a triangular graph of mole fractions indicating compositions that can be presumed to be eutectic compositions in a ternary composition of silicon carbide (SiC), boron carbide ($B_4C$), and metal boride ($MeB_2$). The unit of each axis is mol%, and the scale interval is 20 mol%. A "eutectic composition" in the specification is not a narrow term meaning a composition in which all substances composing a eutectic crystal simultaneously change from liquid phases to solid phases at a particular temperature (a eutectic temperature). A "eutectic composition" in the specification is used as a broad term meaning a composition in which a liquid phase as a mixture of a plurality of substances separates into a plurality of solid phases by cooling. Thus, the concept of a eutectic crystal includes the concepts of a hypoeutectic crystal and a hypereutectic crystal. A metal element assigned to each point in Fig. 2A is a specific example of the virtual metal element Me. For example, if the metal element is titanium (Ti), a composition in which silicon carbide (SiC) is 37 mol%, boron carbide ($B_4C$) is 45 mol%, and titanium boride ($TiB_2$) is 18 mol% is a composition that can be presumed to be a eutectic composition. A point to which a metal element is not assigned in Fig. 2A is a composition that can be presumed to be a eutectic composition if the composition does not include $MeB_2$. From Fig. 2A, it is considered that regardless of the presence or absence and the type of metal boride ($MeB_2$), if the difference between the mole fraction of silicon carbide and the mole fraction of boron carbide is 60 mol% pt or less, a composition close to a eutectic composition is obtained. From Fig. 2A, it is considered that regardless of the presence or absence of metal boride ($MeB_2$) and the type of metal boride ($MeB_2$), if the difference between the mole fraction of silicon carbide and the mole fraction of boron carbide is 20 mol% pt or less, a composition closer to a eutectic composition is obtained. Based on this, the difference ($|a - b|$) between the mole fraction a of silicon carbide and the mole fraction b of boron carbide in the powder 10 is set so that the composition is similar to a composition closer to a eutectic composition.

In the powder 10 as illustrated in the present embodiment, the position and the area of a portion where particles come into contact with each other are random. Thus, even if a eutectic composition is strictly blended, the position and the area where a eutectic reaction occurs are random. If, however, compounds composing the powder 10 are blended in a range where a eutectic reaction can occur, a eutectic reaction randomly occurs when the powder 10 is heated. Then, a liquid phase that occurs by melting flows, and eutectic reactions occur in a chain-reaction manner, whereby the powder 10 can be melted.

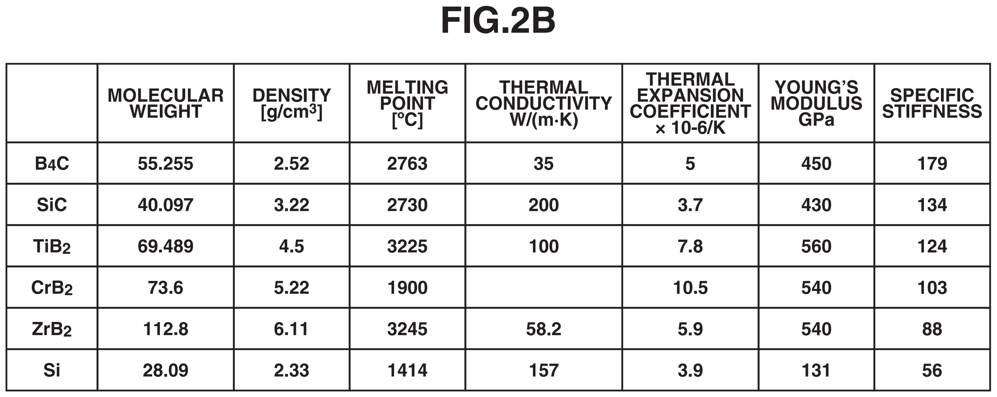

The melting points of compositions that can be presumed to be eutectic compositions illustrated in Fig. 2A can all fall within the range of 1800 to 2200°C. This means that these melting points are lower than the melting point of at least any of silicon carbide (SiC), boron carbide ($B_4C$), and metal boride ($MeB_2$), and therefore, the powder 10 can be melted at a lower temperature. Fig. 2B illustrates examples of the melting points of silicon carbide (SiC), boron carbide ($B_4C$), and metal boride ($MeB_2$).

As illustrated in Fig. 1A, a typical powder 10 according to the present embodiment can include the first particle group 11 composed of a first compound 1, and the second particle group 12 composed of a second compound 2. The powder 10 can further include a third particle group 13 composed of a third compound 3. As described above, the powder can be formed of a plurality of particle groups composed of materials different from each other. As a production method for producing such a powder, base materials of materials may be formed into particles by pulverization or the like, and the particles may be mixed together. As another example of the configuration of the powder 10, each particle may be composed of a plurality of materials. As a production method for producing such a powder, base materials in which the plurality of materials coexists may be formed into particles by pulverization or the like.

It is desirable that the powder 10 should include particles having a particle size of 10 $\mu$m or more. It is more desirable that the powder 10 should include particles having a particle size of 20 $\mu$m or more. The powder 10 includes such particles having a particle size of 10 $\mu$m or more, whereby it is possible to give suitable fluidity to the powder 10. To give suitable fluidity to the powder 10, the particle sizes of the particles having a particle size of 10 $\mu$m or more and the particles having a particle size of 20 $\mu$m or more may be 100 $\mu$m or less, or may be 50 $\mu$m or less. The presence of particles having a particle size of 100 $\mu$m or more can decrease manufacturing accuracy.

It is desirable that the powder 10 should include particles having a particle size of 1 $\mu$m or more and containing silicon carbide. It is desirable that the powder 10 should include particles having a particle size of 5 $\mu$m or more and containing silicon carbide. It is desirable that the powder 10 should include particles having a particle size of 10 $\mu$m or more and containing silicon carbide. It is desirable that the powder 10 should include particles having a particle size of 20 $\mu$m or more and containing silicon carbide. It is desirable that the powder 10 should include particles having a particle size of 100 $\mu$m or less and containing silicon carbide. It is desirable that the powder 10 should include particles having a particle size of 50 $\mu$m or less and containing silicon carbide. A particle group containing silicon carbide may include particles having a particle size of less than 1 $\mu$m or particles having a particle size of less than 5 $\mu$m.

Although a particle size can be defined regarding at least one particle, it is desirable that the particle size should be evaluated based on the representative particle size of the grain size distribution in a particle group composed of particles of the same type. It is desirable that the representative particle size should be a particle size as the median (a median size $D_{50}$) of the grain size distribution of a certain compound. As the representative particle size according to the present embodiment, the catalog value of a compound supply manufacturer may be used, or a numerical value measured by a user themselves may be used. As the representative particle size, an average particle size that is a particle size as the average value of the grain size distribution may be adopted, or a mode size that is a particle size as the mode of the grain size distribution may be adopted.

It is desirable that the median of the particle size of the particle group containing silicon carbide should be 1 $\mu$m or more. It is also desirable that the median of the particle size of the particle group containing silicon carbide should be 5 $\mu$m or more. It is more desirable that the median of the particle size of the particle group containing silicon carbide should be 10 $\mu$m or more. It is even more desirable that the median of the particle size of the particle group containing silicon carbide should be 20 $\mu$m or more. It is desirable that the median of the particle size of the particle group containing silicon carbide should be 100 $\mu$m or less. It is more desirable that the median of the particle size of the particle group containing silicon carbide should be 50 $\mu$m or less.

It is desirable that the powder 10 should include particles having a particle size of 1 $\mu$m or more and containing boron carbide. It is desirable that the powder 10 should include particles having a particle size of 5 $\mu$m or more and containing boron carbide. It is desirable that the powder 10 should include particles having a particle

size of 50 $\mu$m or less and containing boron carbide. It is desirable that the powder 10 should include particles having a particle size of 20 $\mu$m or less and containing boron carbide.

A particle group containing boron carbide may include particles having a particle size of less than 1 $\mu$m or particles having a particle size of less than 5 $\mu$m. It is desirable that the median of the particle size of the particle group containing boron carbide should be 1 $\mu$m or more. It is also desirable that the median of the particle size of the particle group containing boron carbide should be 5 $\mu$m or more. It is desirable that the median of the particle size of the particle group containing boron carbide should be 50 $\mu$m or less. It is more desirable that the median of the particle size of the particle group containing boron carbide should be 15 $\mu$m or less. It is desirable that the median of the particle size of the particle group containing boron should be 100 $\mu$m or less. It is more desirable that the median of the particle size of the particle group containing boron should be 50 $\mu$m or less.

If the thermal conductivity of the first compound 1 is higher than the thermal conductivity of the second compound 2, it is desirable that a median Da of the particle size of the first particle group 11 should be greater than a median Db of the particle size of the second particle group 12 (Da > Db).

If the density of the third compound 3 is higher than the density of the second compound 2, it is desirable that a median Dc of the particle size of the third particle group 13 should be smaller than the median Db of the particle size of the second particle group 12 (Db > Dc).

For reference, Fig. 2B illustrates the physical property values of several related materials. Silicon carbide (SiC) has a thermal conductivity higher than that of boron carbide ($B_4C$). Accordingly, the first compound 1 can be silicon carbide (SiC), and the second compound 2 can be boron carbide ($B_4C$). Metal boride has a density higher than that of boron carbide ($B_4C$). Accordingly, the third compound 3 can be metal boride.

If the first compound 1 is silicon carbide, and the second compound 2 is boron carbide, and the third compound 3 is metal boride, it is desirable that the median Da of the particle size of the first particle group 11 should be greater than the median Db of the particle size of the second particle group 12 (Da > Db). It is also desirable that the median Dc of the particle size of the third particle group 13 should be smaller than the median of the particle size Db of the second particle group 12 (Db > Dc).

It is also desirable that the median Da of the particle size of the first particle group 12, the median Db of the particle size of the second particle group 12, and the median Dc of the particle size of the third particle group 13 should satisfy Db/Da < 0.4 and Dc/Da < 0.33. In this case, Db > Dc or Db < Dc.

A characteristic organizational structure is formed by the melting and the solidification of the powder 10 according to the present embodiment. Fig. 1B schematically illustrates an organizational structure portion 20 that is a portion having an organizational structure. The powder according to the present embodiment contains boron (B), carbon (C), and silicon (Si) so that an organizational structure including a first solid phase 21 composed of silicon carbide (SiC) and a second solid phase 22 composed of boron carbide ($B_4C$) is formed by the melting and the solidification of the powder. If the powder 10 further contains the metal element (Me), a structure organization formed by the melting and the solidification of the powder 10 can include a third solid phase 23 composed of metal boride ($MeB_2$) that is a boride of the metal element (Me). In the organizational structure portion 20, a void 24 may be provided. It is also desirable that the void ratio of the organizational structure portion 20 should be less than 50%. It is also desirable that the void ratio of the organizational structure portion 20 should be less than 25%. It is more desirable that the void ratio of the organizational structure portion 20 should be less than 10%. A value obtained by subtracting the void ratio from 100% can be referred to as a "relative density (%)".

Fig. 2B illustrates examples of the densities and the Young's moduli of silicon carbide (SiC) and boron carbide ($B_4C$). The densities of boron carbide ($B_4C$) and silicon carbide (SiC) are higher than that of silicon (Si), but the density of boron carbide ($B_4C$) is lower than that of silicon carbide (SiC). The Young's modulus of boron carbide ($B_4C$) is higher than that of silicon carbide (SiC), but the Young's moduli of boron carbide ($B_4C$) and silicon carbide (SiC) are higher than that of silicon (Si). A manufactured product having the organizational structure portion 20 including the first solid phase 21 composed of silicon carbide (SiC) and the second solid phase 22 composed of boron carbide ($B_4C$) can achieve a lightweight property (a low density) and a high stiffness (a high Young's modulus). The Young's modulus [GPa]/the density [g/cm$^3$] can be evaluated as a specific stiffness. If the manufactured product is light in weight, the inertial force of the manufactured product is small, and therefore, the manufactured product can achieve a quick movement. The greater the specific stiffness is, the more suitable for a machine component that requires a precise movement the manufactured product is.

In the organizational structure portion 20, the percentage of the amount of substance (mol) of each compound relative to the amount of substance (mol) of all compounds of the organizational structure portion 20 is a mole fraction (mol%). Particularly, attention is paid to a mole fraction A (mol%) of silicon carbide, a mole fraction B (mol%) of boron carbide, and a mole fraction C (mol%) of metal boride in the organizational structure portion 20. A > 0 mol%, B > 0 mol%, and C $\geq$ 0 mol%.

It is desirable that the total of the mole fraction A (mol%) of silicon carbide, the mole fraction B (mol%) of boron carbide, and the mole fraction C (mol%) of metal boride should be 75 mol% or more. It is also desirable that the total of the mole fractions A, B, and C (mol%) should be 86 mol% or more. It is more desirable that the total of the mole fractions A, B, and C (mol%) should be 90 mol% or more. The total of the mole fractions A, B, and C (mol%) may be 100 mol%. It is desirable that a mole fraction D (mol%) of a compound that is none of silicon carbide, boron carbide, and metal boride should be smaller than both the mole fraction A (mol%) of silicon carbide and the mole fraction B (mol%) of boron carbide (A > D, B > D). It is desirable that the mole fraction D (mol%) should be smaller than the mole fraction C (mol%) of metal boride (C > D). It is desirable that the mole fraction D (mol%) of the compound that is none of silicon carbide, boron carbide, and metal boride should be smaller than all of the mole fraction A (mol%) of silicon carbide, the mole fraction B (mol%) of boron carbide, and the mole fraction C (mol%) of metal boride (A > D, B > D, C > D). It is desirable that the mole fraction D (mol%) should be less than 10 mol%. It is desirable that the mole fraction of a compound including neither of boron (B) and carbon (C) should be 14 mol% or less. It is desirable that the mole fraction of the compound including neither of boron (B) and carbon (C) should be less than 10 mol%.

The mole fractions in the organizational structure portion 20 may be measured, for example, regarding compounds in the two-dimensional range of a quadrangle of M ($\mu$m) $\times$ N ($\mu$m) or the three-dimensional range of a quadrangular prism of L ($\mu$m) $\times$ M ($\mu$m) $\times$ N ($\mu$m). For example, L, M, and N are 1 $\mu$m or more, 5 $\mu$m or more, 10 $\mu$m or more, 50 $\mu$m or more, 100 $\mu$m or more, 1000 $\mu$m or less, or 500 $\mu$m or less. Fig. 2B also illustrates an organizational structure that is a quadrangular prism (a cube) having dimensions comparable to these.

In the present embodiment, the difference (|A - B|) between the mole fraction A of silicon carbide and the mole fraction B of boron carbide is 60 mol% pt or less. It is desirable that the difference (|A - B|) between the mole fraction A of silicon carbide and the mole fraction B of boron carbide should be 50 mol% pt or less. It is also desirable that the difference (|A - B|) between the mole fraction A of silicon carbide and the mole fraction B of boron carbide should be 40 mol% pt or less. It is more desirable that the difference (|A - B|) between the mole fraction A of silicon carbide and the mole fraction B of boron carbide should be 30 mol% pt or less. The difference (|A - B|) between the mole fraction A of silicon carbide and the mole fraction B of boron carbide may be 20 mol% pt or less, or may be 5 mol% pt or more.

As described above, the difference (|A - B|) between the mole fraction A of silicon carbide and the mole fraction B of boron carbide in the organizational structure portion 20 is set so that the composition is similar to a composition closer to a eutectic composition. Consequently, it is possible to make the melting point of the organizational structure portion 20 lower than the melting point of silicon carbide and the melting point of boron carbide.

Although the mole fraction A of silicon carbide may be greater than the mole fraction B of boron carbide (A > B), it is desirable that the mole fraction A of silicon carbide should be smaller than the mole fraction B of boron carbide (A < B). As is understood from Fig. 2A, if the mole fraction A of silicon carbide is smaller than the mole fraction B of boron carbide, silicon carbide and boron carbide are likely to form a eutectic composition of silicon carbide and boron carbide.

If an organizational structure includes the third solid phase composed of metal boride (C > 0), it is desirable that the mole fraction A of silicon carbide should be greater than the mole fraction C of metal boride (A > C). It is also desirable that the mole fraction B of boron carbide should be greater than the mole fraction C of metal boride (B > C). As is understood from Fig. 2B, metal boride ($MeB_2$) has a density higher than that of silicon carbide, and therefore, if the mole fraction C of metal boride is great, this is disadvantageous in reducing the weight of the powder 10. Thus, to aim to reduce the weight of the powder 10, it is desirable that the mole fraction C of metal boride should be as small as possible. To reduce the weight of the powder 10 and lower the melting point of the organizational structure portion 20, it is desirable to use a metal element with which the mole fraction C of metal boride in a eutectic composition is 40 mol% or less (e.g., Ta, Nb, Ti, Hf, or Zr) in Fig. 2A. It is more desirable to use a metal element with which the mole fraction C of metal boride in a eutectic composition is 20 mol% or less (e.g., Ti, Hf, or Zr) in Fig. 2A.

It is desirable that the mole fraction A of silicon carbide should be 35 to 60 mol%. It is also desirable that the mole fraction A of silicon carbide should be 35 to 45 mol%. It is desirable that the mole fraction B of boron carbide should be 36 to 65 mol%. It is also desirable that the mole fraction B of boron carbide should be 36 to 59 mol%. It is desirable that the mole fraction C of metal boride should be 4 to 40 mol%.

In the organizational structure portion 20, it is desirable that at least one (desirably two) of the first solid phase composed of silicon carbide (SiC) and the second solid phase composed of boron carbide ($B_4C$) should be crystalline. It is desirable that at least one (desirably two, more desirably three) of the first solid phase composed of silicon carbide (SiC), the second solid phase composed of boron carbide ($B_4C$), and the third solid phase composed of metal boride ($MeB_2$) should be crystalline. The state where a solid phase composing the organizational structure portion 20 is crystalline is more advantageous in achieving a high strength than in the state where the solid phase is non-crystalline.

It is desirable that the melting point of the organizational structure portion 20 should be 1500°C or more and 2500°C or less. It is desirable that the density of the organizational structure portion 20 should be 2.6 to 4.4 [g/cm³]. This is a density between the density of a simple substance of boron carbide and the density of a simple substance of titanium boride. It is desirable that the Young's modulus of the organizational structure portion 20 should be 300 [GPa] or more. It is also desirable that the Young's modulus of the organizational structure portion 20 should be 390 [GPa] or more. The Young's modulus of the organizational structure portion 20 may be 1000 [GPa] or less, or may be 500 [GPa] or less. It is desirable that the Young's modulus [GPa]/the density [g/cm$^3$], i.e., the specific stiffness, of the organizational structure portion 20 should be 100 or more. It is more desirable that the specific stiffness of the organizational structure portion 20 should be 135 or more. If the specific stiffness of the organizational structure portion 20 is 100 or more, the specific stiffness of the organizational structure portion 20 exceeds the specific stiffness of SiC.

It is possible to manufacture a manufactured product by an additive manufacturing method from a material using a powder satisfying the above conditions. It is possible to manufacture a manufactured product by irradiating the material using the powder with infrared light. It is desirable that the infrared light should be a laser beam, but the infrared light may be a lamp. It is possible to manufacture a manufactured product by irradiating the material using the powder with a laser beam. It is possible to manufacture a manufactured product by heating the material using the powder. As the heating method, light heating using infrared light or the like is suitable. However, heating using an electron beam, heating in a heating oven using a resistance heating method or an induction heating method, or the like may be used. Regarding any of the manufactured products, it is possible to produce an intended article by appropriately processing the manufactured product. Particularly, a powder bed fusion method using an infrared laser (an infrared laser melting method) is suitable. In the powder bed fusion method using an infrared laser, a powder layer is heated and melted by irradiating the powder layer with a laser beam of infrared light. This process is repeated, thereby performing additive manufacturing. Besides the additive manufacturing method, the powder 10 is placed in a mold in which a cavity having a shape according to the shape of an intended manufactured product is formed, and the powder 10 is heated, whereby it is also possible to produce a manufactured product along the shape of the cavity. A powder injection molding method for placing the powder 10 in a mold by injection can also be employed.

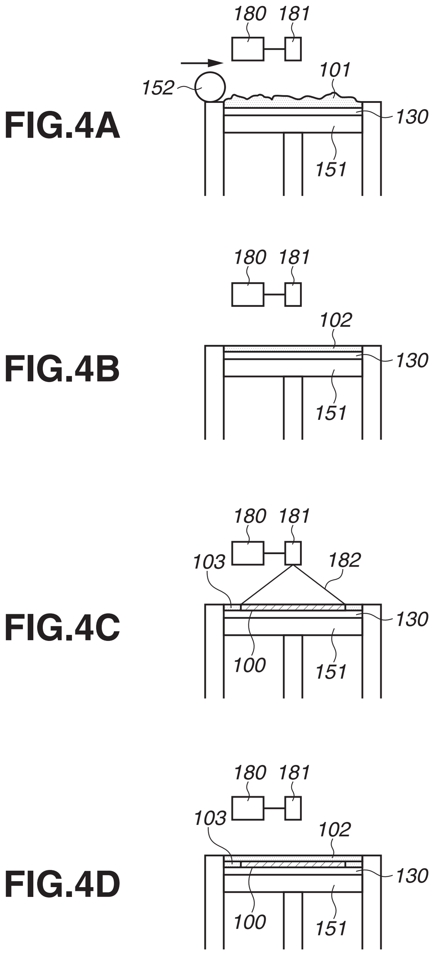

With reference to schematic diagrams in Figs. 4A to 4H, a description is given of the flow of basic manufacturing in a production method using the infrared laser melting method capable of using the manufacturing powder according to the present embodiment.

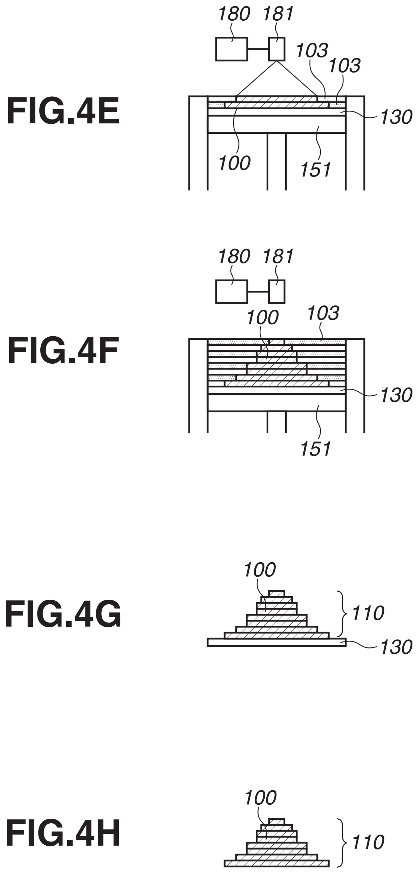

First, a raw material powder 101 is placed on a base 130 installed on a stage 151 and is leveled to a predetermined thickness by a roller 152, thereby forming a powder layer 102 (Figs. 4A and 4B). The powder layer 102 is irradiated with a laser beam emitted from a laser light source 180 while a scanner section 181 scans the laser beam based on slice data generated from shape data of a desired three-dimensional model. A beam diameter $\Phi$ of the laser beam is, for example, 10 to 1000 $\mu$m, or for example, 30 to 300 $\mu$m, or for example, 50 to 150 $\mu$m. For example, a wavelength $\lambda$ of the laser beam is the wavelength of the infrared region, namely 0.75 to 15 $\mu$m. In an irradiation range 182 of the laser beam, the raw material powder melts and then solidifies, and a solidified portion 100 corresponding to slice data of a single layer is formed (Fig. 4C). Next, the stage 151 is lowered, a new powder layer 102 is formed on the solidified portion 100 (Fig. 4D) and irradiated with a laser beam based on the slice data. This series of steps is repeated the number of times according to the slice data, thereby obtaining a manufactured product 110 (Figs. 4E and 4F). Finally, an unsolidified raw material powder 103 is removed. An unnecessary portion of the manufactured product is removed, and the manufactured product and the base are separated from each other, where necessary (Figs. 4G and 4H). Further, then, heat treatment may be performed, where necessary.

In a case where a manufactured product is manufactured by heating the material using the powder, a crack can occur in the manufactured product due to thermal expansion and contraction. The crack present in the manufactured product can be repaired using a material including at least any of boron, carbon, silicon, and the metal element. Examples of the method for repairing the crack include several methods, and the reparation may be achieved only by burning, or a repairing source may be utilized. In a case where the repairing source is used, the method can also be classified based on the differences between steps. For example, the method is a method for adding a material contributing to the reparation to a raw material powder, or a method for adding a material contributing to the reparation to a crack portion of the manufactured product. In either case, burning can facilitate the obtaining of the reparation effect. In a case where the repairing source in the second case is applied, the material to be used to repair the crack can be a liquid including at least any of boron, carbon, silicon, and the metal element. The manufactured product is impregnated with the liquid, whereby it is possible to repair the crack present in the manufactured product by soaking the crack in the liquid. As the liquid to be used to repair the crack, for example, a particle dispersion liquid such as an Si nanoparticle dispersion liquid or the like, polycarbosilane, which is a precursor polymer that becomes SiC if burnt, or a diluted solution of polycarbosilane can be used. The material to be used to repair the crack includes the same element as an element included in the manufactured product, whereby it is possible to excellently repair the crack. After the manufactured product is soaked in the liquid, it is also desirable to heat the manufactured product in the temperature range of 1000°C or more and 2000°C or less. On the other hand, in a case where the repairing source in the first case is applied, the material to be used to repair the crack can be a powder including silicon. After the manufactured product is manufactured using a mixed powder obtained by mixing a powder of a main raw material with the powder as the repairing source, the manufactured product is heated in the temperature range of 1400°C or more and 2200°C or less, whereby it is possible to excellently repair the crack. For example, it is desirable that the powder including silicon should be a metal silicide such as Si, $TiSi_2$, or the like. It is also desirable that the heating temperature for the reparation should be the melting point or higher of the powder of the repairing source. For example, in a case where Si having a melting point of 1400°C is used also as the repairing source, the heating temperature for the reparation may be 1400°C or more.

As the material using the powder, the powder itself can be used. However, a mixed powder obtained by adding another powder to the powder can also be used. Alternatively, a material obtained by mixing the powder and a liquid can also be used. A manufactured product can also be manufactured by applying a liquid to a desired region in the powder. These liquids are binders that bind particles of the powder, and can contain a resin.

In a case where a manufactured product is manufactured by irradiating the material using the powder with a laser beam, it is desirable that the laser beam and the powder should satisfy the following relationship. The median Da of the particle size of the first particle group 11 is greater than the median Db of the particle size of the second particle group 12, and the median Dc of the particle size of the third particle group 13 is smaller than the median and smaller than Db of the particle size of the second particle group 12. It is desirable that the beam diameter $\Phi$ of the laser beam should be larger than the median Da of the particle size of the first particle group 11. In this manner, it is possible to efficiently irradiate particles of the first particle group 11 with the laser beam. It is desirable that the wavelength $\lambda$ of the laser beam should be smaller than the median Dc of the particle size of the third particle group 13. In this manner, it is possible to efficiently irradiate particles of the third particle group 13 with the laser beam. It is desirable that particles should be irradiated with light in an irradiation form in which approximation can be achieved by geometric optics rather than Rayleigh scattering and Mie scattering.

For example, an article obtained in this manner can be used as a machine component. The machine component includes an organizational structure including the first solid phase composed of silicon carbide and the second solid phase composed of boron carbide. The feature of this organizational structure can be similar to that of the above organizational structure. In the machine component, the first solid phase composed of silicon carbide achieves strength, and the second solid phase composed of boron carbide achieves lightness. Consequently, it is possible to achieve a machine component that is light in weight and has a high strength.

It is possible to form various devices by combining a machine component 7 and at least any of an electric component, an optical component, and a resin component. The devices can be printing devices or office devices such as an inkjet printer, a laser printer, a scanner, a copying machine, a multifunction peripheral, and the like. The devices can be video devices such as a camera, a display, a projector, and the like. The devices can be optical devices such as an interchangeable lens, binoculars, and the like. The devices can be medical devices such as an X-ray imaging apparatus, a computed tomography (CT) apparatus, a magnetic resonance imaging (MRI) apparatus, an endoscope, and the like. The devices can be industrial devices such as an exposure apparatus, a film formation apparatus, an electric generator, a robot, and the like. The devices can be various movement devices or transportation devices such as an automobile, an aircraft, a vessel, and the like. The devices can be scientific devices such as nuclear reactors (a fusion reactor and a fission reactor), an accelerator, and the like, and space devices such as a rocket, a satellite, and the like.

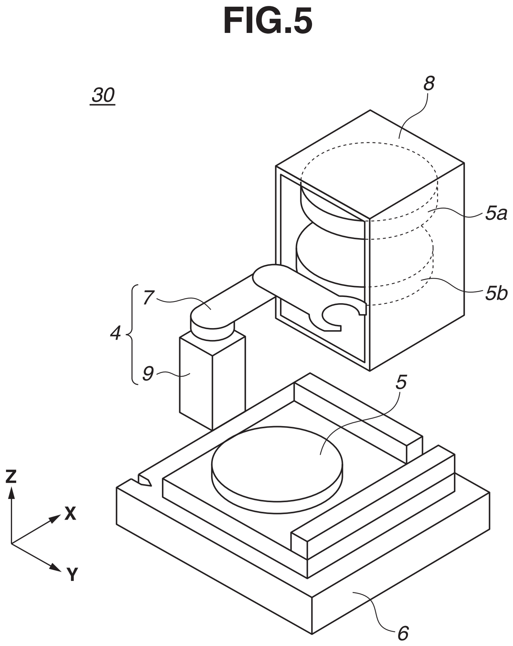

Fig. 5 illustrates an example of the use form of the machine component 7. In a machine unit 4 including the machine component 7 and a movement mechanism 9 that moves the machine component 7, the machine component 7 is light in weight and has a high strength, and therefore, the machine component 7 can be moved at high speed and with high accuracy. For example, the machine component 7 is a link component used as a hand or an arm, but may be a transmission component such as a gear, a cam, a shaft, or the like, or a joining component such as a screw or the like. The melting point of the machine component according to the present embodiment can be 1000°C or more or desirably 1500°C or more, and can also be used as a heat-resistant component or a fire-resistant component. For example, the movement mechanism 9 can include a motor or the like. An example of a device including the machine component 7 is a production apparatus 30. In the production apparatus 30 including the machine unit 4 that holds and/or conveys a work 5 and a processing unit 6 that processes the work 5, the accuracy and the throughput of production improve. A production target of the production apparatus 30 is not particularly limited, and the production apparatus 30 may be a production apparatus of an electric device or a production apparatus of a transportation device, or may be a production apparatus of an electronic device such as an exposure apparatus, an etching apparatus, a film formation apparatus, or the like.

The powder 10 according to the present embodiment is described below based on more specific examples suitable for an additive manufacturing powder.

To address the need to give priority to the state where the machine component 7 is light in weight, it is desirable that the density of a material to be used should be low. In the infrared laser melting method, however, it takes ingenuity to treat SiC, which can decompose at near 2545°C when heated. Although SiC has a low density, namely 3.21 $g/cm^3$, the present inventors have diligently considered the possibility of reforming SiC by the addition of different materials to further reduce the weight of the machine component 7.

To make the apparent density lower than that of SiC, the addition of $B_4C$, which is a carbide having a density lower than that of SiC, is effective. To further make the apparent density equivalent to that of SiC by adding a material having a density higher than that of SiC, the addition of $B_4C$, which is a carbide having a density lower than that of SiC, is effective. In a case where a material is cut off from a substrate after additive manufacturing, and then, heat treatment is performed to develop a desired physical property value, a temperature of 2100°C or more, or further, a temperature exceeding 2200°C is often required. In terms of productivity, however, it is desirable that the temperature of the heat treatment should be 2200°C or less, and it is desirable that the temperature of the heat treatment should be 2000°C or less. For example, the eutectic temperature of a SiC-$B_4C$ (a mole ratio of 43:57) eutectic system is 2150°C. The eutectic temperature of a $B_4C$-$TiB_2$ (a mole ratio of 76:24) eutectic system is 2200°C. Thus, it is possible to perform heat treatment by preventing the decomposition of SiC by heat treatment at 2200°C or less. Also, in a case where, for example, Si or $TiSi_2$ is added as a crack repairing source to the raw material of SiC-$B_4C$, it is possible to prevent the decomposition of SiC. Further, it is desirable to use a ternary eutectic system obtained by adding $TiB_2$ to SiC-$B_4C$. The SiC-$B_4C$-$TiB_2$ ternary eutectic crystal has a eutectic temperature of 2000°C or less, namely 1945°C, and is sufficiently far from the decomposition temperature of SiC, and therefore, it is possible to prevent the decomposition of SiC. Also, in a case where, for example, Si or $TiSi_2$ is added as a crack repairing source to the raw material of SiC-$B_4C$-$TiB_2$, it is possible to prevent the decomposition of SiC.

It is considered that the composition ratio of the SiC-$B_4C$-$TiB_2$ ternary eutectic crystal is included in a range including SiC:$B_4C$:$TiB_2$ = 38.0:44.0:18.0 or 40.8:51.1:8.1 at a mole ratio.

Thus, it is desirable to form an additive manufacturing powder composed of three types of compounds, namely SiC, $B_4C$, and $TiB_2$, so that a composition that can be approximated to a ternary eutectic crystal is in the following ranges. The mole fraction of SiC is 30 to 50 mol%, desirably 36 to 43 mol%, for example, 38.0 to 40.8 mol%. The mole fraction of $B_4C$ is 30 to 60 mol%, desirably 40 to 55 mol%, for example, 44.0 to 51.1 mol%. The mole fraction of $TiB_2$ is 1 to 30 mol%, desirably 3 to 23 mol%, for example, 8.1 to 18.0 mol%. At this time, the apparent density is 2.97 to 3.03 g/cm³ and is a value lower than 3.21 g/cm³, which is the density of SiC.

For example, the volume ratio can be in the following ranges. SiC is 27.7 to 29.1 vol%, $B_4C$ is 56.2 to 63.8 vol%, and $TiB_2$ is 7.1 to 16.1 vol%.

Using the molecular weight of SiC, namely 40.11, the density of SiC, namely 3.21 g/cm³, the molecular weight of $B_4C$, namely 55.255, the density of $B_4C$, namely 2.52 g/cm³, the molecular weight of $TiB_2$, namely 69.489, and the density of $TiB_2$, namely 4.52 g/cm³, and the composition ratio of these compounds, calculation was performed to obtain more than the apparent density.

Since the apparent density of a manufactured product only needs to be in a low state, the raw material powder configuration of a manufactured product composed of the SiC-$B_4C$-$TiB_2$ ternary eutectic crystal is not limited to a raw material powder composed only of three types of compounds, namely SiC, $B_4C$, and $TiB_2$. If the composition of the entirety of a raw material powder is maintained, the raw material powder may be composed of five types including four types of compounds and carbon, such as SiC-$B_4C$-$SiB_6$-TiC-C.

As described above, in an additive manufacturing powder according to the present embodiment, elements composing the powder are boron, carbon, silicon, and a metal element (titanium in this example), and the additive manufacturing powder can include three or more types of compounds. In a case where titanium is used as the metal element, it is desirable to select compounds from a group of SiC, $B_4C$, $SiB_3$, $SiB_6$, TiB, $TiB_2$, TiC, TiSi, $TiSi_2$, and the like.

Regarding an additive manufacturing powder that fits the infrared laser melting method, to obtain a dense manufactured product, it is important to manufacture the additive manufacturing powder at a temperature at which SiC does not decompose. Thus, regarding a case where the powder was composed of three compounds, namely SiC, $B_4C$, and $TiB_2$, required conditions were considered.

The times when particles of these three types of compounds reached a certain temperature when the compounds were heated were estimated. As the premise of the estimation, a situation was assumed where $B_4C$ which had the lowest melting point, namely 2350°C, and was high in the composition ratio melted. The surface temperatures of particles of the compounds were constant at 2400°C, and the times until the center temperatures of the particles of the compounds reached 2350°C by internal thermal diffusion were estimated. In the estimation, the thermal diffusion coefficient of SiC, namely $8.65 \times 10^{-5}$ m²/sec, was estimated using the thermal conductivity, namely 186 W/m·K, the specific heat, namely 670 J/kg·K, and the density of SiC. The thermal diffusion coefficient of $B_4C$, namely $1.55 \times 10^{-5}$ m²/sec, was estimated using the thermal conductivity, namely 37 W/m·K, the specific heat, namely 950 J/kg·K, and the density of $B_4C$. The thermal diffusion coefficient of $TiB_2$, namely $9.61 \times 10^{-6}$ m²/sec, was estimated using the thermal conductivity, namely 25 W/m·K, the specific heat, namely 578 J/kg·K, and the density of $TiB_2$.

In a case where the compounds are heated under these conditions, SiC does not reach the decomposition temperature, and $TiB_2$ does not melt, either. However, $B_4C$ (56.2 to 63.8 vol%), which is the highest in the volume ratio, melts, the melting progresses by involving SiC and $TiB_2$, and the compounds ultimately form a eutectic composition. This results in the situation where the melting accelerates.

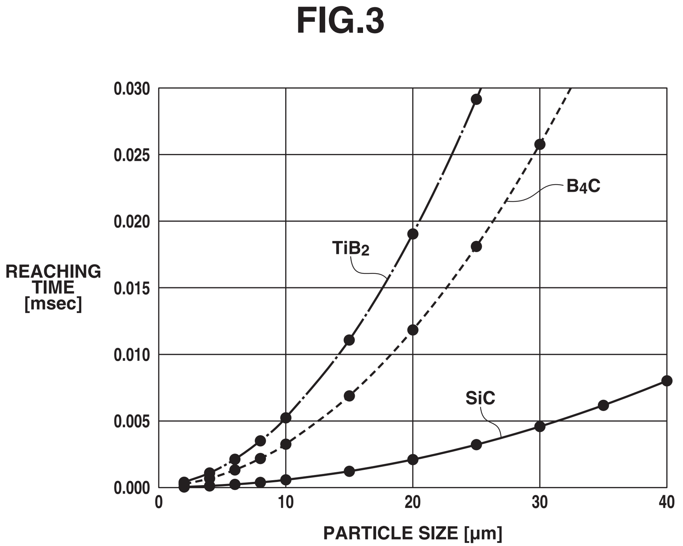

Fig. 3 illustrates the estimation results of the correlations between the particle sizes of the compounds under these conditions (a case is assumed where the particle sizes are uniform) and the times when the compounds reach the certain temperature. SiC is indicated by a solid line, $B_4C$ is indicated by a dashed line, and $TiB_2$ is indicated by a dashed-dotted line. In Fig. 3, if the times when the compounds reach the same temperature are compared, it can be read that the greater the thermal diffusion coefficient is, the greater the particle sizes is. For example, it can be read that if the particle size of SiC is about 30 $\mu$m, it takes about 0.005 msec from when the surface temperature of the particles reaches 2400°C to when the center temperature of the particles reaches 2350°C. At the same time, if the particle size of $B_4C$ is about 12 $\mu$m, the center temperature of the particles reaches 2350°C, and if the particle size of $TiB_2$ is about 10 $\mu$m, the center temperature of the particles reaches 2350°C.

Based on the above, regarding the additive manufacturing powder according to the present embodiment, it is desirable that a compound having a high thermal diffusion coefficient (the thermal conductivity/the specific heat • the density) should have a larger particle size so that the center temperatures of the top three types of compounds having high mole fractions increase in comparable times. Thus, it is desirable that a compound having a high thermal conductivity should have a larger particle size, and it is desirable that a compound having a low specific heat or a low density should have a larger particle size. That is, it is desirable that the representative particle size of a compound having a high thermal diffusion coefficient should be larger than the representative particle size of a compound having a low thermal diffusion coefficient (the other two types of compounds). Similarly, it is desirable that the representative particle size of a compound having a high thermal conductivity should be larger than the representative particle size of a compound having a low thermal conductivity (the other two types of compounds). It is desirable that the representative particle size of a compound having a low specific heat should be larger than the representative particle size of a compound having a high specific heat (the other two types of compounds). It is desirable that the representative particle size of a compound having a low density should be larger than the representative particle size of a compound having a high density (the other two types of compounds). The "representative particle size" is desirably a median $D_{50}$ and refers to a particle size as the median of the grain size distribution of a certain compound. As the representative particle size according to the present embodiment, the catalog value of a compound supply manufacturer may be used, or a numerical value measured by the user themselves may be used. As the representative particle size, an average particle size that is a particle size as the average value of the grain size distribution can be adopted, or a mode size that is a particle size as the mode of the grain size distribution can be adopted.

Further, if the particle sizes (e.g., the medians $D_{50}$) of SiC, $B_4C$, and $TiB_2$ are Da, Db, and Dc, respectively, it is also desirable that the additive manufacturing powder according to the present embodiment should satisfy Db/Da < 0.4. It is also desirable that the additive manufacturing powder according to the present embodiment should satisfy Dc/Db < 0.33.

On the other hand, the infrared laser melting method includes the step in which the raw material powder 101 is leveled to the predetermined thickness by the roller 152, thereby forming the powder layer 102. If, however, particles occupying 70 vol% of the entirety of the additive manufacturing powder have a diameter of less than 8 $\mu$m, the fluidity of the powder significantly decreases, and a failure in leveling is likely to occur. Thus, to avoid this, from Figs. 2A and 2B, it is desirable that the particle size (e.g., the median $D_{50}$) of SiC should be 20 $\mu$m or more.

Further, if an additive manufacturing powder for composing the SiC-$B_4C$-$TiB_2$ ternary eutectic crystal is a mixed powder of particles of compounds composed of SiC, $B_4C$, and $TiB_2$, it is desirable that the powder should be in the situation where the composition can be regarded as a composition in which the three types are uniform in an infrared laser spot size. For example, it is desirable that a laser used in the infrared laser melting method should be a laser having a wavelength of about 1060 to 1070 nm and a focal spot size of about 60 to 100 $\mu$m, such as an Nd:YAG laser, a Yb fiber laser, or the like. Thus, a case is considered where the laser spot diameter is 100 $\mu$m, and the space filling rate of the powder is 50%. In a case where the powder in a hemispherical portion of a laser spot diameter of 100 $\mu$m melts, the volume occupied by the powder is about 131000 $\mu$m², taking into account a filling rate of 50% with respect to the volume of the powder that melts. An example of the range where the composition is similar to a ternary eutectic composition is SiC:$B_4C$:$TiB_2$ = 29.1:63.8:7.1 vol%, and therefore, the volumes occupied by the compounds are calculated such that the volume occupied by SiC is 38121 $\mu$m², the volume occupied by $B_4C$ is 83578 $\mu$m², and the volume occupied by $TiB_2$ is 9301 $\mu$m². If a case is considered where the particle size of SiC is about 30 $\mu$m, and the particle size of $B_4C$ is about 20 $\mu$m, SiC includes about three particles, and $B_4C$ includes about 20 particles. It is desirable that as a condition for making the surface temperature of SiC particles less likely to become greater than or equal to the decomposition temperature of SiC particles, $B_4C$ particles should include six or more particles in view of placement symmetry. This is because if $B_4C$ particles include five or fewer particles, the probability that half of SiC particles are independently exposed to the infrared laser increases. Further, in order that $TiB_2$ of which the occupied volume has the smallest proportion is uniformly distributed, it is desirable that at least one of $TiB_2$ particles should come into contact with each of about 23 particles as the total of particles of SiC and $B_4C$. Thus, it is desirable that $TiB_2$ should include 23

or more particles. Thus, the particle size to be derived is about 4.6 $\mu$m. Further, if a case is considered where the particle size of SiC is 30 $\mu$m, and the particle size of $B_4C$ is 11 $\mu$m, SiC includes about three particles, and $B_4C$ includes about 120 particles. A desirable particle size of $TiB_2$ is calculated similarly to the above and is about 2.6 $\mu$m. As described above, the particle size relationships are maintained by determining the particle size of a compound having a small occupied volume among the top three types of compounds, whereby it is possible to achieve excellent melting. As a result, it is possible to obtain a dense manufactured product.

Examples

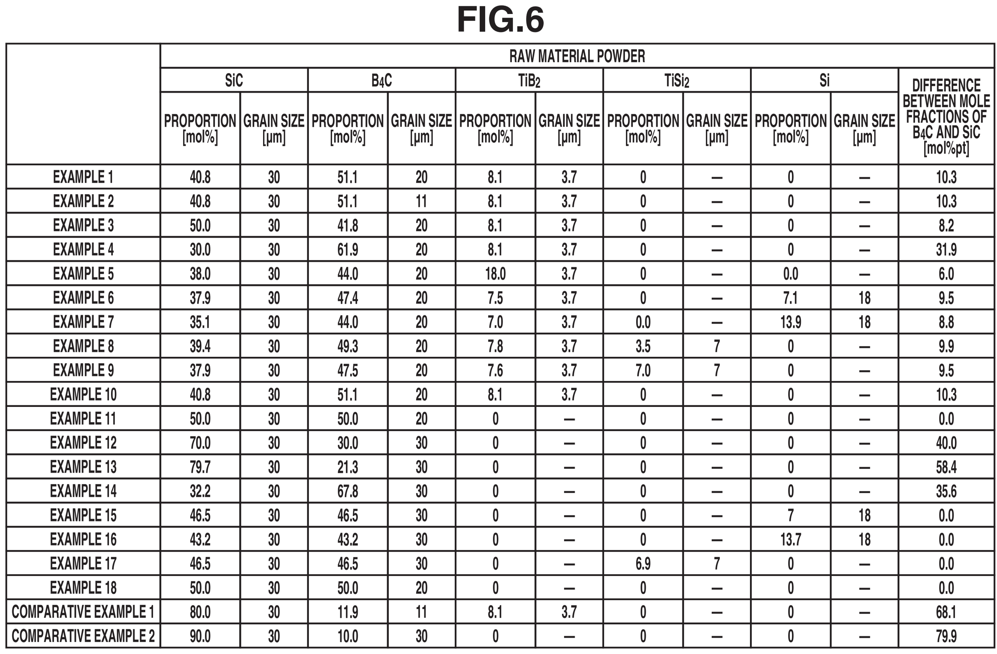

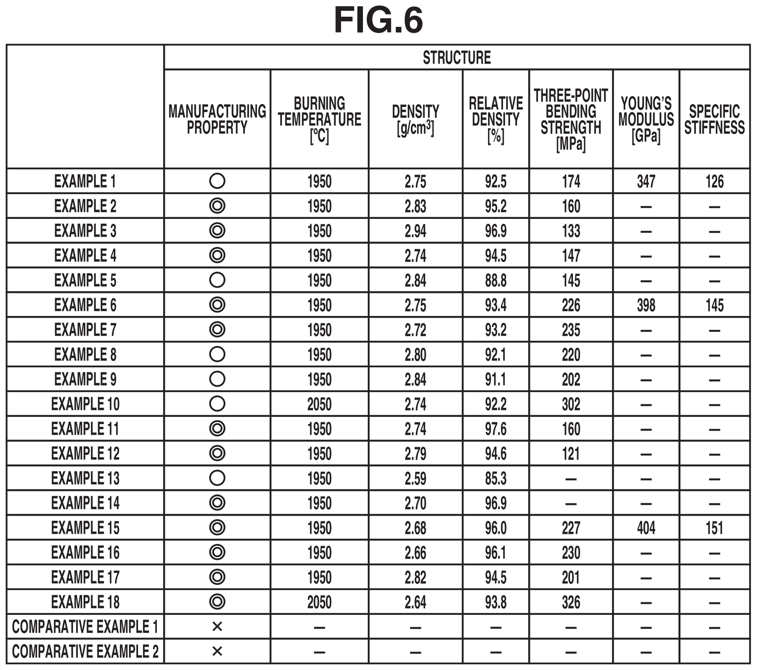

Fig. 6 illustrates a list of examples and comparative examples according to the present invention. This table illustrates the composition of a raw material powder, the manufacturing property, the burning temperature, the density, the relative density, the three-point bending strength (measured by a test according to JIS R1601), the Young's modulus (measured by a test according to JIS R1602), and the specific stiffness (the Young's modulus [GPa]/the density [g/cm$^3$]).

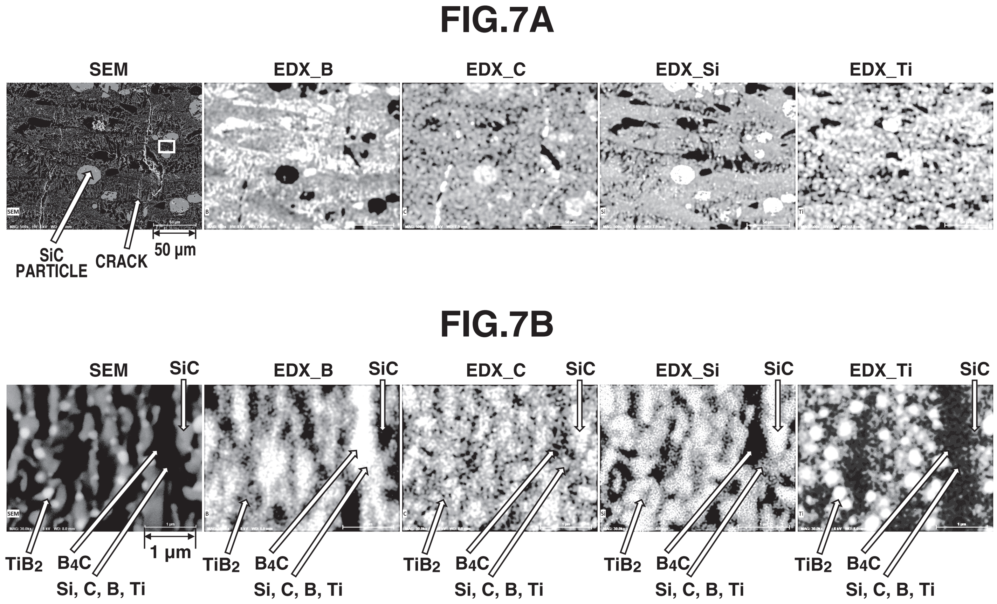

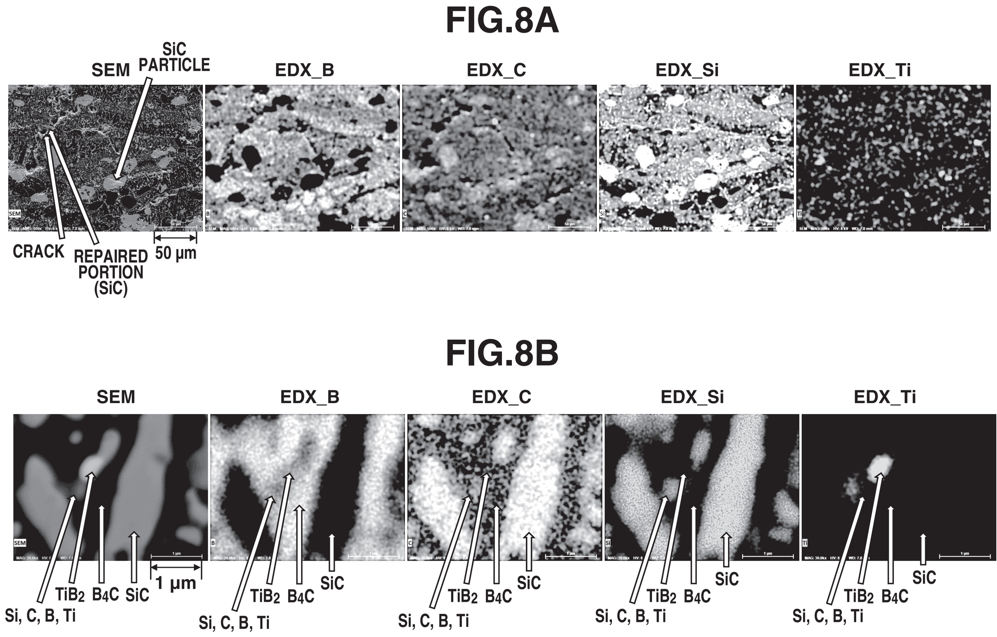

Figs. 7A to 12B illustrate scanning electron microscope (SEM) observation images (represented as "SEM") of structures according to examples 1, 6, 9, 11, 16, and 17 and element mapping images (represented as EDX_E: E is an element) of B, C, Si, Ti, and the like based on scanning electron microscope-energy-dispersive X-ray spectroscopy (SEM-EDX) evaluation. The fields of view of the SEM observation images and the element mapping images match each other. In each element mapping image, the concentration of the corresponding element is low in a region close to black, and the concentration of the corresponding element is high in a region close to white. In each of Figs. 7A, 8A, 9A, 10A, 11A, and 12A, the observation magnification is 500 times, and the field of view is smaller than 150 $\mu$m vertical $\times$ 200 $\mu$m horizontal (30000 $\mu$m$^2$) and greater than 100 $\mu$m vertical $\times$ 150 $\mu$m horizontal (15000 $\mu$m$^2$). That is, each of Figs. 7A, 8A, 9A, 10A, 11A, and 12A illustrates the form in a wide range (a range smaller than 150 $\mu$m vertical $\times$ 200 $\mu$m horizontal (30000 $\mu$m$^2$) and larger than 100 $\mu$m vertical $\times$ 150 $\mu$m horizontal (15000 $\mu$m$^2$)) of the structure. In each of Figs. 7B, 8B, 9B, 10B, 11B, and 12B, the observation magnification is 30000 times, and the field of view is smaller than 3 $\mu$m vertical $\times$ 4 $\mu$m horizontal (12 $\mu$m$^2$) and greater than 2 $\mu$m vertical $\times$ 3 $\mu$m horizontal (6 $\mu$m$^2$). That is, each of Figs. 7B, 8B, 9B, 10B, 11B, and 12B illustrates the form in a narrow range (a range smaller than 3 $\mu$m vertical $\times$ 4 $\mu$m horizontal (12 $\mu$m$^2$) and larger than 2 $\mu$m vertical $\times$ 3 $\mu$m horizontal (6 $\mu$m$^2$)) of the structure. In each of Figs. 7A, 7B, and 9A to 12B, an observation portion in the narrow range is located in a white frame indicated in the SEM observation image in the wide range. In each of Figs. 8A and 8B, an observation portion in the narrow range is located outside the SEM observation image in the wide range.

(Example 1)

SiC particles of which the median of the particle size was about 30 $\mu$m, $B_4C$ particles of which the median of the particle size was about 20 $\mu$m, and $TiB_2$ particles of which the median of the particle size was 3.7 $\mu$m were prepared. $B_4C$ was weighed in a proportion of 10 g and $TiB_2$ was weighed in a proportion of 2 g relative to about 5.8 g of SiC so that SiC:$B_4C$:$TiB_2$ = 40.8:51.1:8.1 (a mole ratio). SiC, $B_4C$, and $TiB_2$ were put into a 1-L polymer container up to 70% of the container, zirconia beads of $\varphi$ 5 mm were added, and the resulting product was put into a roller mixer for 30 minutes, thereby obtaining an additive manufacturing powder. This powder configuration satisfies the suitable composition range where the difference between the mole fractions of SiC and $B_4C$ is 60 mol% pt or less and which is similar to the composition of a ternary eutectic crystal, and also satisfies the situation where the number of particles of $B_4C$ is greater than or equal to six times the number of particles of SiC in terms of median, and the number of particles of $TiB_2$ is greater than or equal to the total number of particles of SiC and $B_4C$. The ratio of SiC:$B_4C$:$TiB_2$ is about 3:20:351. This is an example of a desirable situation according to the present invention.

As the infrared laser melting method, ProXDMP100 manufactured by 3D Systems Corporation was used. This apparatus includes a roller recoater and is characterized by being able to form the uniform powder layer 102. The infrared laser has a spec that the infrared laser can output up to 50 W.

An aluminum substrate having a size of 50 $\times$ 50 mm was placed on the manufacturing stage 151 in this apparatus, and manufacturing was performed on the aluminum substrate. The thickness of the powder layer 102 in additive manufacturing was set to 20 $\mu$m per layer, but the maximum particle size of the powder to be used was 30 $\mu$m, and therefore, at least the initially thickness was set to 40 $\mu$m. Then, seven shapes of 5 $\times$ 38 mm were placed in parallel, and manufacturing was executed up to a height of 5 mm. The manufacturing conditions at that time were conditions such as an infrared laser power of 40 W, a scanning speed of 140 mm/sec, and a scanning pitch of 60 $\mu$m. These seven shapes were cut off from the substrate, the average density of the seven shapes was calculated from the weight and the volume of a size of 5 $\times$ 38 $\times$ 4.5 mm, and the relative density was 92.5%. As described above, a dense manufactured article exceeding 90% was obtained, and the situation where SiC reached the decomposition temperature and densification did not progress was avoided.

A theoretical true density calculated from the preparation composition of the ternary eutectic crystal was set to 2.97 g/cm$^3$ and used to calculate the relative density. Heat treatment at 1950°C was performed on the obtained manufactured article. In the wide range illustrated in Fig. 7A, the remnant of SiC particles remaining unmelted without being completely melted was confirmed, but a SiC region formed through the melting of SiC particles was confirmed near the remnant. In the obtained structure, a region composed of SiC, a region composed of $B_4C$, a region composed of $TiB_2$, and a region composed of Si, C, B, and Ti were observed in the narrow range illustrated in Fig. 7B. As illustrated in Fig. 7A, a crack was confirmed, but a part of the crack was in a repaired state. The three-point bending strength of the structure according to example 1 was 174 MPa, and the specific stiffness of the structure according to example 1 was 126.

(Example 2)

Only the particle size of $B_4C$ was changed from example 1, and SiC particles of which the median of the particle size was about 30 $\mu$m, $B_4C$ particles of which the median of the particle size was about 11 $\mu$m, and $TiB_2$ particles of which the median of the particle size was 3.7 $\mu$m were prepared. $B_4C$ was weighed in a proportion of 10 g and $TiB_2$ was weighed in a proportion of 2 g relative to about 5.8 g of SiC so that $SiC:B_4C:TiB_2 = 40.8:51.1:8.1$ (a mole ratio), SiC, $B_4C$, and $TiB_2$ were put into a 1-L polymer container up to 70% of the container, zirconia beads of $\varphi$ 5 mm were added, and the resulting product was put into a roller mixer for 30 minutes, thereby obtaining an additive manufacturing powder. This powder configuration satisfies the suitable composition range where the difference between the mole fractions of SiC and $B_4C$ is 60 mol% pt or less and which is similar to the composition of a ternary eutectic crystal, and also satisfies the situation where the number of particles of $B_4C$ is greater than or equal to six times the number of particles of SiC in terms of median, and the number of particles of $TiB_2$ is greater than or equal to the total number of particles of SiC and $B_4C$. The ratio of $SiC:B_4C:TiB_2$ is about 3:120:351. This is an example of a desirable situation according to the present invention.

Based on a manufacturing apparatus and manufacturing conditions similar to those in example 1, the same shapes were produced, and the relative density was similarly calculated and was 95.2%. As described above, if the medians ($D_{50}$) of the particle sizes of SiC, $B_4C$, and $TiB_2$ were Da, Db, and Dc, respectively, by making the particle size of $B_4C$ smaller than that in example 1,

$$Db/Da = 0.366 < 0.4$$

$$Dc/Da <= 0.123 < 0.33$$

It can be said that the medians of the particle sizes further satisfied desirable particle size relationships, whereby density improved.

(Examples 3, 4, and 5)

Only the mixing ratio of particles was changed from example 1, and powders obtained by mixing the particles in quantities in Fig. 6 were prepared. These powder configurations satisfy the suitable composition range where the difference between the mole fractions of SiC and $B_4C$ is 60 mol% pt or less. Based on a manufacturing apparatus and manufacturing conditions similar to those in example 1, the same shapes were produced, and the relative densities were similarly calculated and were 96.9% in example 3, 94.5% in example 4, and 88.8% in example 5.

(Examples 6 and 7)

For the purpose of repairing a crack region, the powder according to example 1 was mixed with Si particles having quantities in Fig. 6 by a method similar to those for the other particles. Using these mixed powders, manufactured products were produced similarly to example 1. Heat treatment was performed on the manufactured products under the same conditions as those in example 1. In the wide range illustrated in Fig. 8A, the remnant of SiC particles remaining unmelted without being completely melted was confirmed, but a SiC region formed through the melting of SiC particles was confirmed near the remnant. In the obtained structures, a region composed of SiC, a region composed of $B_4C$, a region composed of $TiB_2$, and a region composed of Si, C, B, and Ti were observed in the narrow range illustrated in Fig. 8B. From the SEM observation image illustrated in Fig. 8A, it was confirmed that the crack region was sufficiently repaired. The three-point bending strengths of the structures according to examples 6 and 7 were high values, namely 200 MPa or more. The specific stiffness of the structure according to example 6 was a high value, namely 135 or more. It can be said that the sufficient reparation of the crack region improved the mechanical properties.

(Examples 8 and 9)

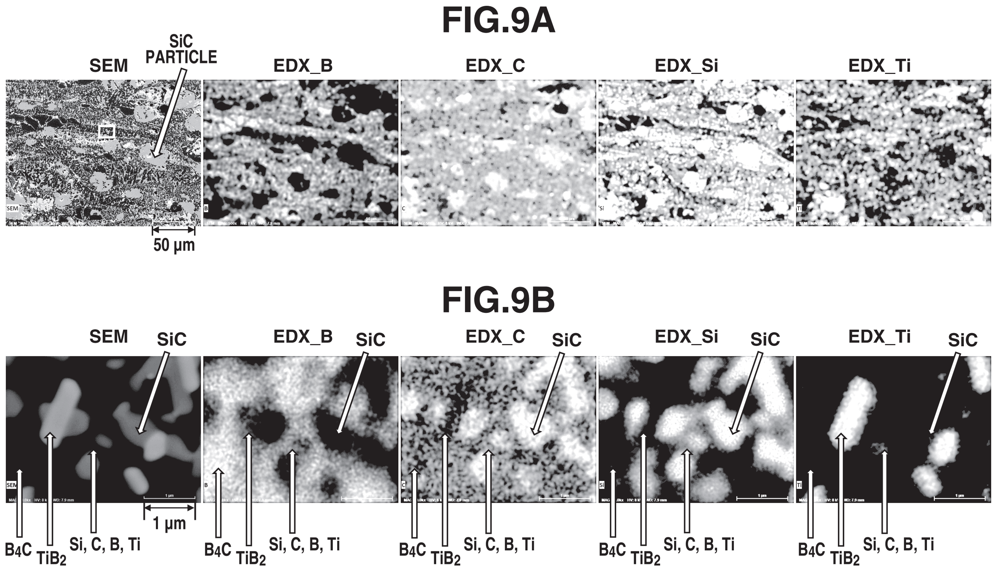

For the purpose of repairing a crack region, the powder according to example 1 was mixed with $TiSi_2$ particles having quantities in Fig. 6 by a method similar to those for the other particles. Using these mixed powders, manufactured products were produced similarly to example 1. Heat treatment was performed on the manufactured products under the same conditions as those in example 1. In the wide range illustrated in Fig. 9A, the remnant of SiC particles remaining unmelted without being completely melted was confirmed, but a SiC region formed through the melting of SiC particles was confirmed near the remnant. In the obtained structures, a region composed of SiC, a region composed of $B_4C$, a

region composed of TiB$_2$, and a region composed of Si, C, B, and Ti were observed in the narrow range illustrated in Fig. 9B. From the SEM observation image illustrated in Fig. 9A, it was confirmed that the crack region was sufficiently repaired. The three-point bending strengths of the structures according to examples 8 and 9 were high values, namely 200 MPa or more. It can be said that the sufficient reparation of the crack region improved the mechanical properties.

(Example 10)

Heat treatment at 2050°C was performed on a manufactured article similar to that according to example 1. In the obtained structure, a region composed of SiC, a region composed of B$_4$C, a region composed of TiB$_2$, and a region composed of Si, C, B, and Ti were observed. It was also confirmed that a crack region was sufficiently repaired. The three-point bending strength was a high value, namely 300 MPa or more. It can be said that the sufficient reparation of the crack region improved the mechanical properties.

(Example 11)

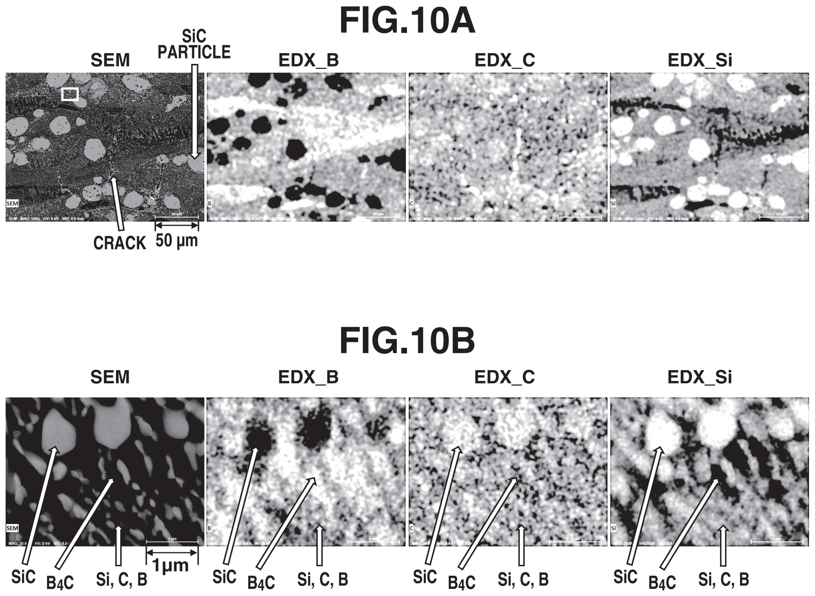

SiC particles of which the median of the particle size was about 30 μm, and B$_4$C particles of which the median of the particle size was about 30 μm were prepared and mixed together by a method similar to that in example 1 so that SiC:B$_4$C = 50.0:50.0 (a mole ratio). This powder configuration satisfies the suitable composition range where the difference between the mole fractions of SiC and B$_4$C was 60 mol% pt or less. Based on a manufacturing apparatus and manufacturing conditions similar to those in example 1, the same shapes were produced, and the relative density was similarly calculated and was 97.6%. Heat treatment was performed on the manufactured product under the same conditions as those in example 1. In the wide range illustrated in Fig. 10A, the remnant of SiC particles remaining unmelted without being completely melted was confirmed, but a SiC region formed through the melting of SiC particles was confirmed near the remnant. In the obtained structure, a region composed of SiC, a region composed of B$_4$C, and a region composed of Si, C, and B were observed in the narrow range illustrated in Fig. 10B. From the SEM observation image illustrated in Fig. 10A, it was confirmed that a part of a crack region was in a repaired state. The three-point bending strength of the structure according to example 11 was 160 MPa.

(Examples 12, 13, and 14)

Only the mixing ratio of particles was changed from example 11, and powders obtained by mixing the particles in quantities in Fig. 6 were prepared. These powder configurations satisfy the suitable composition range where the difference between the mole fractions of SiC and B$_4$C is 60 mol% pt or less. Based on a manufacturing apparatus and manufacturing conditions similar to those in example 1, the same shapes were produced, and the relative densities were similarly calculated and were 94.6% in example 12, 85.3% in example 13, and 96.9% in example 14.

(Examples 15 and 16)

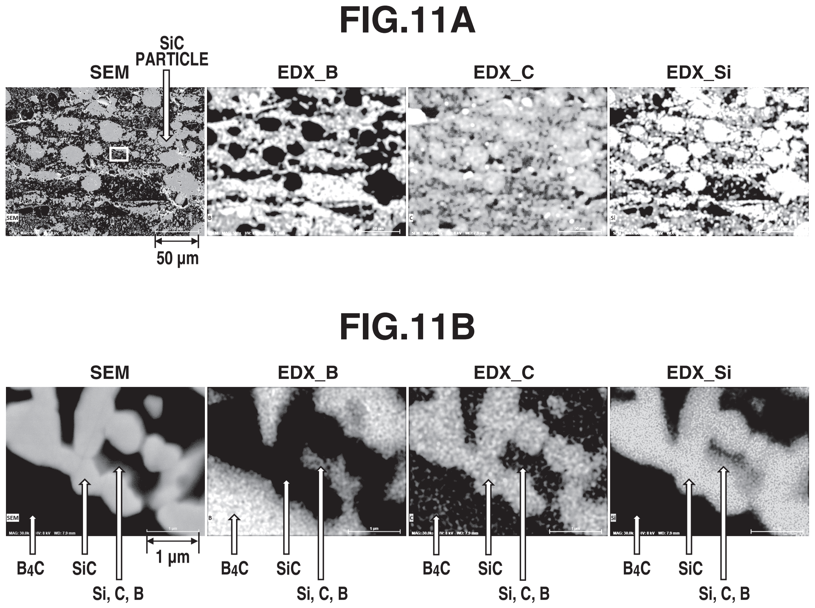

For the purpose of repairing a crack region, the powder according to example 11 was mixed with Si having quantities in Fig. 6 by a method similar to those for the other particles. Using these mixed powders, manufactured products were produced similarly to example 1. Heat treatment was performed on the manufactured products under the same conditions as those in example 1. In the wide range in Fig. 11A, the remnant of SiC particles remaining unmelted without being completely melted was confirmed, but a SiC region formed through the melting of SiC particles was confirmed near the remnant. In the obtained structures, a region composed of SiC, a region composed of B$_4$C, and a region composed of Si, C, and B were observed in the narrow range illustrated in Fig. 11B. From the SEM observation image illustrated in Fig. 11A, it was confirmed that the crack region was sufficiently repaired. The three-point bending strengths were high values, namely 200 MPa or more. The specific stiffness of the structure according to example 15 was a high value, namely 135 or more. It can be said that the sufficient reparation of the crack region improved the mechanical properties.

(Example 17)

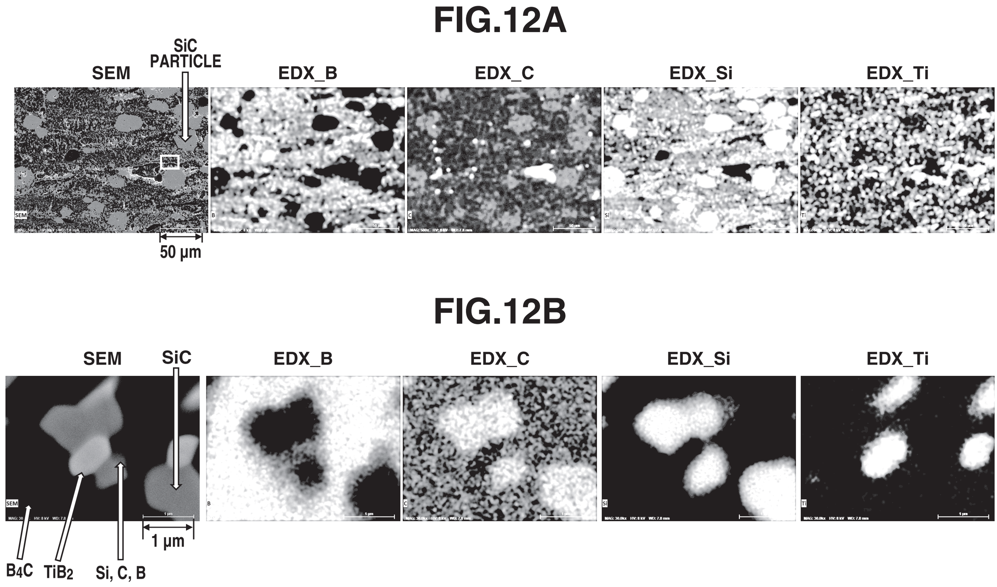

For the purpose of repairing a crack region, the powder according to example 11 was mixed with TiSi$_2$ having quantities in Fig. 6 by a method similar to those for the other particles. Using this mixed powder, a manufactured product was produced similarly to example 1. Heat treatment was performed on the manufactured product under the same conditions as those in example 1. In the wide range illustrated in Fig. 12A, the remnant of SiC particles remaining unmelted without being completely melted was confirmed, but a SiC region formed through the melting of SiC particles was confirmed near the remnant. In the obtained structure, a region composed of SiC, a region composed of B$_4$C, a region composed of TiB$_2$, and a region composed of Si, C, and B were observed in the narrow range illustrated in Fig. 12B. From the SEM observation image illustrated in Fig. 12A, it was confirmed that the crack region was sufficiently repaired. The three-point bending strength of the structure according to example 17 was a high value, namely 200 MPa or more. It can be said that the sufficient reparation of the crack region improved the mechanical properties.

(Example 18)

Heat treatment at 2050°C was performed on a manufactured article similar to that according to example 11. In the obtained structure, a region composed of SiC, a region composed of $B_4C$, and a region composed of Si, C, and B were observed. It was also confirmed that a crack region was sufficiently repaired. The three-point bending strength was a high value, namely 300 MPa or more. It can be said that the sufficient reparation of the crack region improved the mechanical properties.

(Comparative Example 1)

SiC particles of which the median of the particle size was about 30 $\mu$m, $B_4C$ particles of which the median of the particle size was about 11 $\mu$m, and $TiB_2$ particles of which the median of the particle size was 3.7 $\mu$m, which were the same as those according to example 2, were prepared. $B_4C$ was weighed in a proportion of 2.05 g and $TiB_2$ was weighed in a proportion of 1.76 g relative to about 10 g of SiC so that $SiC:B_4C:TiB_2 = 80.0:11.9:8.1$ (a mole ratio) as a configuration in which SiC was a main component. SiC, $B_4C$, and $TiB_2$ were put into a 1-L polymer container up to 70% of the container, zirconia beads of $\varphi$ 5 mm were added, and the resulting product was put into a roller mixer for 30 minutes, thereby obtaining an additive manufacturing powder. In this powder configuration, the difference between the mole fractions of SiC and $B_4C$ exceeds 60 mol% pt, and the powder configuration does not satisfy the situation where the number of particles of $B_4C$ is greater than or equal to six times the number of particles of SiC in terms of median. As the ratio of the numbers of particles, $SiC:B_4C:TiB_2$ is about 7:35:445. This is an example of a situation different from a desirable state according to the present embodiment.

Based on a manufacturing apparatus and manufacturing conditions similar to those in example 1, the same shapes were produced. This resulted in the situation where among seven shapes of 5 × 38 mm, four shapes were not maintained due to a manufacturing failure in the middle, and three shapes were maintained in the final shapes, but were porous and broken when the three shapes were cut off from the substrate. As described above, in the situation where the conditions in the present invention were not satisfied, densification was not achieved, and this resulted in a manufacturing failure.

(Comparative Example 2)

SiC particles of which the median of the particle size was about 30 $\mu$m, and $B_4C$ particles of which the median of the particle size was about 30 $\mu$m, which were the same as those according to example 11, were prepared. The particles were mixed together similarly to example 1 so that $SiC:B_4C = 90.0:10.0$ (a mole ratio), thereby obtaining an additive manufacturing powder. In this powder configuration, the difference between the mole fractions of SiC and $B_4C$ exceeds 60 mol% pt. This is an example of a situation different from a desirable state according to the present embodiment.

Based on a manufacturing apparatus and manufacturing conditions similar to those in example 1, the same shapes were produced. This resulted in the situation where among seven shapes of 5 × 38 mm, seven shapes were not maintained due to a manufacturing failure in the middle. As described above, in the situation where the conditions in the present invention were not satisfied, densification was not achieved, and this resulted in a manufacturing failure.

The above embodiments can be appropriately changed without departing from their technical ideas. For example, a plurality of embodiments can be combined together. Some items in at least one embodiment can be deleted or replaced. A new item can be added to at least one embodiment.

The present disclosure includes the following Technologies 1 to 31.

[Technology 1]

A powder for manufacturing,

wherein the powder contains boron, carbon, and silicon,
wherein an organizational structure including a first solid phase composed of silicon carbide and a second solid phase composed of boron carbide is formed by melting and solidification of the powder, and
wherein in a portion having the organizational structure, a difference between a mole fraction of the silicon carbide and a mole fraction of the boron carbide is less than or equal to 60 mol% pt.

[Technology 2]

The powder according to technology 1,

wherein the powder contains a metal element, and
wherein the organizational structure includes a third solid phase composed of metal boride that is a boride of the metal element.

[Technology 3]

A powder for manufacturing,

wherein the powder contains silicon carbide and boron carbide, and
wherein a difference between a mole fraction of the silicon carbide and a mole fraction of the boron carbide in the powder is less than or equal to 60 mol% pt.

[Technology 4]

The powder according to any one of technologies 1 to 3, wherein the powder contains metal boride.

[Technology 5]

The powder according to any one of technologies 1 to 4, wherein the powder includes particles having a particle size of more than or equal to 5 $\mu$m and containing silicon carbide.

[Technology 6]

The powder according to any one of technologies 1 to 5, wherein the powder includes particles having a particle size of more than or equal to 5 $\mu$m and containing boron carbide.

[Technology 7]

The powder according to any one of technologies 1 to 6, wherein the powder includes particles having a particle size of more than or equal to 20 $\mu$m.

[Technology 8]

The powder according to any one of technologies 1 to 7, wherein the difference is 30 less than or equal to mol% pt.

[Technology 9]

The powder according to any one of technologies 1 to 8, wherein the mole fraction of the silicon carbide is smaller than the mole fraction of the boron carbide.

[Technology 10]

The powder according to any one of technologies 1 to 9, wherein the mole fraction of the silicon carbide and the mole fraction of the boron carbide are greater than a mole fraction of the metal boride.

[Technology 11]

The powder according to any one of technologies 1 to 10, wherein the mole fraction of the silicon carbide is 35 to 60 mol%, and the mole fraction of the boron carbide is 36 to 65 mol%.

[Technology 12]

The powder according to any one of technologies 1 to 11, wherein the powder includes a first particle group composed of a first compound, and a second particle group composed of a second compound.

[Technology 13]

The powder according to technology 12,

wherein a thermal conductivity of the first compound is higher than a thermal conductivity of the second compound, and
wherein a particle size of the first particle group is larger than a particle size of the second particle group.

[Technology 14]

The powder according to any one of technologies 1 to 13, wherein the powder includes a first particle group composed of a first compound, a second particle group composed of a second compound, and a third particle group composed of a third compound.

[Technology 15]

The powder according to technology 14,

wherein a density of the third compound is higher than a density of the second compound, and

wherein a particle size of the third particle group is smaller than a particle size of the second particle group.

[Technology 16]

The powder according to technology 14 or 15,

wherein the first compound is silicon carbide, the second compound is boron carbide, and the third compound is metal boride, and
wherein a particle size of the first particle group is larger than the particle size of the second particle group, and the particle size of the third particle group is smaller than the particle size of the second particle group.

[Technology 17]

The powder according to any one of technologies 14 to 16,

wherein the first compound is silicon carbide, the second compound is boron carbide, and the third compound is metal boride, and
wherein a particle size Da of the first particle group, a particle size Db of the second particle group, and a particle size Dc of the third particle group satisfy Db/Da < 0.4 and Dc/Da < 0.33.

[Technology 18]

The powder according to any one of technologies 1 to 17, wherein the metal boride is titanium boride.

[Technology 19]

An article production method comprising manufacturing a manufactured product from a material using the powder according to any one of technologies 1 to 18 by an additive manufacturing method.

[Technology 20]

An article production method comprising manufacturing a manufactured product by irradiating a material using the powder according to any one of technologies 1 to 18 with infrared light.

[Technology 21]

An article production method for manufacturing a manufactured product by irradiating a material using the powder according to any one of technologies 1 to 18 with a laser beam,

   wherein the particle size of the first particle group is larger than the particle size of the second particle group, and the particle size of the third particle group is smaller than the particle size of the second particle group, and
   wherein a beam diameter of the laser beam is larger than the particle size of the first particle group, and a wavelength of the laser beam is smaller than the particle size of the third particle group.

[Technology 22]

An article production method for manufacturing a manufactured product by heating a material using the powder according to any one of technologies 1 to 18, wherein a crack present in the manufactured product is repaired using a material including at least any of boron, carbon, silicon, and a metal element.

[Technology 23]

A machine component including an organizational structure including a first solid phase composed of silicon carbide and a second solid phase composed of boron carbide, wherein in a portion having the organizational structure, a difference between a mole fraction of the boron carbide and a mole fraction of the silicon carbide is less than or equal to 60 mol% pt.

[Technology 24]

The machine component according to technology 23, wherein the organizational structure includes a third solid phase composed of metal boride.

[Technology 25]

The machine component according to technology 23 or 24, wherein the mole fraction of the silicon carbide is smaller than the mole fraction of the boron carbide.

[Technology 26]

The machine component according to any one of technologies 23 to 25, wherein in the portion having the organizational structure, the mole fraction of the silicon carbide and the mole fraction of the boron carbide are greater than a mole fraction of the metal boride.

[Technology 27]

The machine component according to any one of technologies 23 to 26, wherein the metal boride is titanium boride.

[Technology 28]

The machine component according to any one of technologies 23 to 27, wherein the machine component satisfies at least either of:

   a condition that at least one of the first solid phase, the second solid phase, and the third solid phase is crystalline; and
   a condition that a melting point of the portion having the organizational structure is more than or equal to 1500°C and less than or equal to 2500°C.

[Technology 29]

The machine component according to any one of technologies 23 to 27, wherein the machine component satisfies at least any of:

   a condition that a density of the portion having the organizational structure is 2.6 to 4.4 [g/cm$^3$];
   a condition that a Young's modulus of the portion having the organizational structure is more than or equal to 390 [GPa]; and
   a condition that the Young's modulus [GPa]/the density [g/cm$^3$] of the portion having the organizational structure is more than or equal to 100.

[Technology 30]

A machine unit comprising:

   the machine component according to any one of technologies 23 to 27; and

a movement mechanism configured to move the machine component.

[Technology 31]

A production apparatus comprising:

a machine unit configured to hold and/or convey a work; and
a processing unit configured to process the work,
wherein the machine unit includes the machine component according to any one of technologies 23 to 27.

The disclosure of the present specification includes not only the matters explicitly described herein, but also all matters that can be understood from the specification and the accompanying drawings. Furthermore, the disclosure of the present specification includes the complementary set of the individual concepts described herein. That is, for example, if the specification states that "A is B," then even if the case where "A is not B" is not explicitly described, the specification is deemed to disclose the case where "A is not B." This is because the description that "A is B" presupposes consideration of the case where "A is not B".

The present invention is not limited to the above-described embodiments, and various modifications and alterations may be made without departing from the spirit and scope of the invention. Accordingly, the following claims are appended in order to publicly disclose the scope of the invention.

This application claims the benefit of Japanese Patent Application No. 2023-056852, filed March 31, 2023, which is hereby incorporated by reference herein in its entirety.

Explanation of Reference Numerals

10 powder
1, 2, and 3 compound
11, 12, and 13 particle (group)
21, 22, and 23 solid phase
7 machine component

**Claims**

1. A powder for manufacturing,

wherein the powder contains boron, carbon, and silicon,
wherein an organizational structure including a first solid phase composed of silicon carbide and a second solid phase composed of boron carbide is formed by melting and solidification of the powder, and
wherein in a portion having the organizational structure, a difference between a mole fraction of the silicon carbide and a mole fraction of the boron carbide is less than or equal to 60 mol% pt.

2. The powder according to claim 1,

wherein the powder contains a metal element, and
wherein the organizational structure includes a third solid phase composed of metal boride that is a boride of the metal element.

3. A powder for manufacturing,

wherein the powder contains silicon carbide and boron carbide, and
wherein a difference between a mole fraction of the silicon carbide and a mole fraction of the boron carbide in the powder is less than or equal to 60 mol% pt.

4. The powder according to claim 3, wherein the powder contains metal boride.

5. The powder according to claim 1 or 3, wherein the powder includes particles having a particle size of more than or equal to 5 $\mu$m and containing silicon carbide.

6. The powder according to claim 1 or 3, wherein the powder includes particles having a particle size of more than or equal to 5 $\mu$m and containing boron carbide.

7. The powder according to claim 1 or 3, wherein the powder includes particles having a particle size of more than or equal to 20 $\mu$m.

8. The powder according to claim 1 or 3, wherein the difference is 30 less than or equal to mol% pt.

9. The powder according to claim 1 or 3, wherein the mole fraction of the silicon carbide is smaller than the mole fraction of the boron carbide.

10. The powder according to claim 2, wherein in the portion having the organizational structure, the mole fraction of the silicon carbide and the mole fraction of the boron carbide are greater than a mole fraction of the metal boride, or
the powder according to claim 4, wherein in the powder, the mole fraction of the silicon carbide and the mole fraction of the boron carbide are greater than a mole fraction of the metal boride.

11. The powder according to claim 1 or 3, wherein the mole fraction of the silicon carbide is 35 to 60 mol%, and the mole fraction of the boron carbide is 36 to 65 mol%.

12. The powder according to claim 1 or 3, wherein the powder includes a first particle group composed of a first compound, and a second particle group composed of a second compound.

13. The powder according to claim 12,

   wherein a thermal conductivity of the first compound is higher than a thermal conductivity of the second compound, and
   wherein a particle size of the first particle group is larger than a particle size of the second particle group.

14. The powder according to claim 1 or 3, wherein the powder includes a first particle group composed of a first compound, a second particle group composed of a second compound, and a third particle group composed of a third compound.

15. The powder according to claim 14,

   wherein a density of the third compound is higher than a density of the second compound, and
   wherein a particle size of the third particle group is smaller than a particle size of the second particle group.

16. The powder according to claim 15,

   wherein the first compound is silicon carbide, the second compound is boron carbide, and the third compound is metal boride, and
   wherein a particle size of the first particle group is larger than the particle size of the second particle group, and the particle size of the third particle group is smaller than the particle size of the second particle group.

17. The powder according to claim 15,

   wherein the first compound is silicon carbide, the second compound is boron carbide, and the third compound is metal boride, and
   wherein a particle size Da of the first particle group, a particle size Db of the second particle group, and a particle size Dc of the third particle group satisfy
   Db/Da < 0.4 and Dc/Da < 0.33.

18. The powder according to claim 2 or 4, wherein the metal boride is titanium boride.

19. An article production method comprising manufacturing a manufactured product from a material using the powder according to claim 1 or 3 by an additive manufacturing method.

20. An article production method comprising manufacturing a manufactured product by irradiating a material using the powder according to claim 1 or 3 with infrared light.

21. An article production method for manufacturing a manufactured product by irradiating a material using the powder according to claim 16 with a laser beam,

   wherein the particle size of the first particle group is larger than the particle size of the second particle group, and the particle size of the third particle group is smaller than the particle size of the second particle group, and
   wherein a beam diameter of the laser beam is larger than the particle size of the first particle group, and a wavelength of the laser beam is smaller than the particle size of the third particle group.

22. An article production method for manufacturing a manufactured product by heating a material using the powder according to claim 1 or 3, wherein a crack present in the manufactured product is repaired using a material including at least any of boron, carbon, silicon, and a metal element.

23. A machine component including an organizational structure including a first solid phase composed of silicon carbide and a second solid phase composed of boron carbide, wherein in a portion having the organizational structure, a difference between a mole fraction of the boron carbide and a mole fraction of the silicon carbide is less than or equal to 60 mol% pt.

24. The machine component according to claim 23, wherein the organizational structure includes a third solid phase composed of metal boride.

25. The machine component according to claim 23, wherein the mole fraction of the silicon carbide is smaller than the mole fraction of the boron carbide.

26. The machine component according to claim 24, wherein in the portion having the organizational structure, the mole fraction of the silicon carbide and the mole fraction of the boron carbide are greater than a mole fraction of the metal boride.

27. The machine component according to claim 24, wherein the metal boride is titanium boride.

28. The machine component according to claim 24, wherein the machine component satisfies at least either of:

a condition that at least one of the first solid phase, the second solid phase, and the third solid phase is crystalline; and
a condition that a melting point of the portion having the organizational structure is more than or equal to 1500°C and less than or equal to 2500°C.

29. The machine component according to claim 23, wherein the machine component satisfies at least any of:

a condition that a density of the portion having the organizational structure is 2.6 to 4.4 [g/cm$^3$];
a condition that a Young's modulus of the portion having the organizational structure is more than or equal to 390 [GPa]; and
a condition that the Young's modulus [GPa]/the density [g/cm$^3$] of the portion having the organizational structure is more than or equal to 100.

30. A machine unit comprising:

the machine component according to claim 23; and
a movement mechanism configured to move the machine component.

31. A production apparatus comprising:

a machine unit configured to hold and/or convey a work; and
a processing unit configured to process the work,
wherein the machine unit includes the machine component according to claim 23.

# FIG.1A

# FIG.1B

# FIG.2A

# FIG.2B

|  | MOLECULAR WEIGHT | DENSITY [g/cm³] | MELTING POINT [°C] | THERMAL CONDUCTIVITY W/(m·K) | THERMAL EXPANSION COEFFICIENT × 10-6/K | YOUNG'S MODULUS GPa | SPECIFIC STIFFNESS |
|---|---|---|---|---|---|---|---|
| $B_4C$ | 55.255 | 2.52 | 2763 | 35 | 5 | 450 | 179 |
| SiC | 40.097 | 3.22 | 2730 | 200 | 3.7 | 430 | 134 |
| $TiB_2$ | 69.489 | 4.5 | 3225 | 100 | 7.8 | 560 | 124 |
| $CrB_2$ | 73.6 | 5.22 | 1900 |  | 10.5 | 540 | 103 |
| $ZrB_2$ | 112.8 | 6.11 | 3245 | 58.2 | 5.9 | 540 | 88 |
| Si | 28.09 | 2.33 | 1414 | 157 | 3.9 | 131 | 56 |

EP 4 692 024 A1

# FIG.3

180 181

101

152 130

FIG.4A 151

180 181

102

130

FIG.4B 151

180 181

103 182

130

FIG.4C 100 151

180 181

103 102

130

FIG.4D 100 151

FIG.4E

FIG.4F

FIG.4G

FIG.4H

# FIG.5

# FIG.6

| | RAW MATERIAL POWDER | | | | | | | | | | DIFFERENCE BETWEEN MOLE FRACTIONS OF B₄C AND SiC [mol%pt] |
| | SiC | | B₄C | | TiB₂ | | TiSi₂ | | Si | | |
| | PROPORTION [mol%] | GRAIN SIZE [μm] | PROPORTION [mol%] | GRAIN SIZE [μm] | PROPORTION [mol%] | GRAIN SIZE [μm] | PROPORTION [mol%] | GRAIN SIZE [μm] | PROPORTION [mol%] | GRAIN SIZE [μm] | |
|---|---|---|---|---|---|---|---|---|---|---|---|
| EXAMPLE 1 | 40.8 | 30 | 51.1 | 20 | 8.1 | 3.7 | 0 | — | 0 | — | 10.3 |
| EXAMPLE 2 | 40.8 | 30 | 51.1 | 11 | 8.1 | 3.7 | 0 | — | 0 | — | 10.3 |
| EXAMPLE 3 | 50.0 | 30 | 41.8 | 20 | 8.1 | 3.7 | 0 | — | 0 | — | 8.2 |
| EXAMPLE 4 | 30.0 | 30 | 61.9 | 20 | 8.1 | 3.7 | 0 | — | 0 | — | 31.9 |
| EXAMPLE 5 | 38.0 | 30 | 44.0 | 20 | 18.0 | 3.7 | 0 | — | 0.0 | — | 6.0 |
| EXAMPLE 6 | 37.9 | 30 | 47.4 | 20 | 7.5 | 3.7 | 0 | — | 7.1 | 18 | 9.5 |
| EXAMPLE 7 | 35.1 | 30 | 44.0 | 20 | 7.0 | 3.7 | 0.0 | — | 13.9 | 18 | 8.8 |
| EXAMPLE 8 | 39.4 | 30 | 49.3 | 20 | 7.8 | 3.7 | 3.5 | 7 | 0 | — | 9.9 |
| EXAMPLE 9 | 37.9 | 30 | 47.5 | 20 | 7.6 | 3.7 | 7.0 | 7 | 0 | — | 9.5 |
| EXAMPLE 10 | 40.8 | 30 | 51.1 | 20 | 8.1 | 3.7 | 0 | — | 0 | — | 10.3 |
| EXAMPLE 11 | 50.0 | 30 | 50.0 | 20 | 0 | — | 0 | — | 0 | — | 0.0 |
| EXAMPLE 12 | 70.0 | 30 | 30.0 | 30 | 0 | — | 0 | — | 0 | — | 40.0 |
| EXAMPLE 13 | 79.7 | 30 | 21.3 | 30 | 0 | — | 0 | — | 0 | — | 58.4 |
| EXAMPLE 14 | 32.2 | 30 | 67.8 | 30 | 0 | — | 0 | — | 0 | — | 35.6 |
| EXAMPLE 15 | 46.5 | 30 | 46.5 | 30 | 0 | — | 0 | — | 7 | 18 | 0.0 |
| EXAMPLE 16 | 43.2 | 30 | 43.2 | 30 | 0 | — | 0 | — | 13.7 | 18 | 0.0 |
| EXAMPLE 17 | 46.5 | 30 | 46.5 | 30 | 0 | — | 6.9 | 7 | 0 | — | 0.0 |
| EXAMPLE 18 | 50.0 | 30 | 50.0 | 20 | 0 | — | 0 | — | 0 | — | 0.0 |
| COMPARATIVE EXAMPLE 1 | 80.0 | 30 | 11.9 | 11 | 8.1 | 3.7 | 0 | — | 0 | — | 68.1 |
| COMPARATIVE EXAMPLE 2 | 90.0 | 30 | 10.0 | 30 | 0 | — | 0 | — | 0 | — | 79.9 |

EP 4 692 024 A1

# FIG.6

| | STRUCTURE | | | | | | |
|---|---|---|---|---|---|---|---|
| | MANUFACTURING PROPERTY | BURNING TEMPERATURE [°C] | DENSITY [g/cm³] | RELATIVE DENSITY [%] | THREE-POINT BENDING STRENGTH [MPa] | YOUNG'S MODULUS [GPa] | SPECIFIC STIFFNESS |
| EXAMPLE 1 | ○ | 1950 | 2.75 | 92.5 | 174 | 347 | 126 |
| EXAMPLE 2 | ◎ | 1950 | 2.83 | 95.2 | 160 | — | — |
| EXAMPLE 3 | ◎ | 1950 | 2.94 | 96.9 | 133 | — | — |
| EXAMPLE 4 | ◎ | 1950 | 2.74 | 94.5 | 147 | — | — |
| EXAMPLE 5 | ○ | 1950 | 2.84 | 88.8 | 145 | — | — |
| EXAMPLE 6 | ◎ | 1950 | 2.75 | 93.4 | 226 | 398 | 145 |
| EXAMPLE 7 | ◎ | 1950 | 2.72 | 93.2 | 235 | — | — |
| EXAMPLE 8 | ○ | 1950 | 2.80 | 92.1 | 220 | — | — |
| EXAMPLE 9 | ○ | 1950 | 2.84 | 91.1 | 202 | — | — |
| EXAMPLE 10 | ○ | 2050 | 2.74 | 92.2 | 302 | — | — |
| EXAMPLE 11 | ◎ | 1950 | 2.74 | 97.6 | 160 | — | — |
| EXAMPLE 12 | ◎ | 1950 | 2.79 | 94.6 | 121 | — | — |
| EXAMPLE 13 | ○ | 1950 | 2.59 | 85.3 | — | — | — |
| EXAMPLE 14 | ◎ | 1950 | 2.70 | 96.9 | — | — | — |
| EXAMPLE 15 | ◎ | 1950 | 2.68 | 96.0 | 227 | 404 | 151 |
| EXAMPLE 16 | ◎ | 1950 | 2.66 | 96.1 | 230 | — | — |
| EXAMPLE 17 | ◎ | 1950 | 2.82 | 94.5 | 201 | — | — |
| EXAMPLE 18 | ◎ | 2050 | 2.64 | 93.8 | 326 | — | — |
| COMPARATIVE EXAMPLE 1 | × | — | — | — | — | — | — |
| COMPARATIVE EXAMPLE 2 | × | — | — | — | — | — | — |

EP 4 692 024 A1

FIG.7A

FIG.7B

FIG.8A

FIG.8B

# FIG.9A

SEM  SiC PARTICLE

EDX_B

EDX_C

EDX_Si

EDX_Ti

50 µm

# FIG.9B

SEM  SiC

EDX_B  SiC

EDX_C  SiC

EDX_Si  SiC

EDX_Ti  SiC

$B_4C$  $TiB_2$  Si, C, B, Ti

$B_4C$  $TiB_2$  Si, C, B, Ti

$B_4C$  $TiB_2$  Si, C, B, Ti

$B_4C$  $TiB_2$  Si, C, B, Ti

$B_4C$  $TiB_2$  Si, C, B, Ti

1 µm

# FIG.10A

SEM
SiC PARTICLE
CRACK
50 µm

EDX_B

EDX_C

EDX_Si

# FIG.10B

SEM
SiC    B4C    Si, C, B
1µm

EDX_B
SiC    B4C    Si, C, B

EDX_C
SiC    B4C    Si, C, B

EDX_Si
SiC    B4C    Si, C, B

EP 4 692 024 A1

FIG.11A

FIG.11B

**FIG.12A**

**FIG.12B**

## INTERNATIONAL SEARCH REPORT

| International application No. |
|---|
| **PCT/JP2024/011833** |

### A. CLASSIFICATION OF SUBJECT MATTER

*C04B 35/577*(2006.01)i; *B28B 1/30*(2006.01)i; *B33Y 10/00*(2015.01)i; *B33Y 30/00*(2015.01)i; *B33Y 70/00*(2020.01)i; *B33Y 80/00*(2015.01)i; *C04B 35/563*(2006.01)i; *C04B 35/565*(2006.01)i
FI: C04B35/577; B28B1/30; B33Y10/00; B33Y30/00; B33Y70/00; B33Y80/00; C04B35/563; C04B35/565

According to International Patent Classification (IPC) or to both national classification and IPC

### B. FIELDS SEARCHED

Minimum documentation searched (classification system followed by classification symbols)
C04B35/56-35/577; B28B1/30-1/42; B33Y10/00-99/00; B29C64/00-64/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2018-508393 A (SINTER PRINT, INC.) 29 March 2018 (2018-03-29) paragraphs [0001], [0005]-[0113] | 1-31 |
| X | WO 2022/218540 A1 (SCHUNK INGENIEURKERAMIK GMBH) 20 October 2022 (2022-10-20) claims 1, 7, 8, p. 1, lines 3-4, p. 3, line 15 to p. 7, line 26 | 1, 3, 5-9, 11, 12, 19, 20, 22, 23, 25, 29-31 |
| A | | 2, 4, 10, 13-18, 21, 24, 26-28 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2024** | **28 May 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/011833**

| Patent document cited in search report | | | Publication date (day/month/year) | Patent family member(s) | | | Publication date (day/month/year) |
|---|---|---|---|---|---|---|---|
| JP | 2018-508393 | A | 29 March 2018 | US | 2016/0271878 | A1 | |
| | | | | paragraphs [0002], [0006]-[0115] | | | |
| | | | | WO | 2016/149301 | A1 | |
| | | | | EP | 3271123 | A1 | |
| WO | 2022/218540 | A1 | 20 October 2022 | EP | 4074676 | A1 | |
| | | | | KR | 10-2023-0169966 | A | |
| | | | | JP | 2024-516957 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019064226 A

- JP 2023056852 A